# NEUE EUROPÄISCHE PATENTSCHRIFT

(11) **EP 1 603 982 B2**
(45) Veröffentlichungstag und Bekanntmachung des Hinweises auf die Entscheidung über den Einspruch: **08.01.2020**
(45) Hinweis auf die Patenterteilung: 25.01.2017
(21) Anmeldenummer: 04717605.2
(22) Anmeldetag: 05.03.2004
(51) Int. Cl.: C09D 11/02

(54) **DRUCKFARBEN MIT CYCLOHEXANPOLYCARBONSÄURE-DERIVATEN**
PRINTING INKS COMPRISING CYCLOHEXANE POLYCARBOXYLIC ACID DERIVATIVES
ENCRES D'IMPRIMERIE CONTENANT DES DERIVES D'ACIDE CYCLOHEXANE POLYCARBOXYLIQUE

(30) Priorität: 14.03.2003 DE 10311588; 19.12.2003 DE 10360391
(43) Veröffentlichungstag der Anmeldung: 14.12.2005
(73) Patentinhaber: BASF SE, 67056 Ludwigshafen am Rhein (DE)
(72) Erfinder: BEDAT, Joelle, F-67850 Offendorf (FR); BREITSCHEIDEL, Boris, 67117 Limburgerhof (DE); SELBERDINGER, Richard, 67126 Hochdorf-Assenheim (DE)
(86) Internationale Anmeldenummer: PCT/EP2004/002238
(87) Internationale Veröffentlichungsnummer: WO 2004/081127

(56) Entgegenhaltungen:
- EP-A- 0 393 901
- EP-A1- 1 416 023
- WO-A-99/32427
- WO-A-03/029339
- WO-A1-03/093002
- US-A- 4 929 475
- DATABASE WPI Section Ch, Week 199723 Derwent Publications Ltd., London, GB; Class A23, AN 1997-255767 XP002283178 & JP 09 087558 A (SEIKO EPSON CORP) 31. März 1997 (1997-03-31)
- DATABASE WPI Section Ch, Week 200005 Derwent Publications Ltd., London, GB; Class A23, AN 2000-057114 XP002283179 & JP 11 309828 A (SHOWA DENKO KK) 9. November 1999 (1999-11-09)

## Beschreibung

Die vorliegende Erfindung betrifft Verpackungsdruckfarben, sowie Drucklacke, die Cyclohexanpolycarbonsäure-Derivate als Komponenten enthalten.

Bei so genannten mechanischen Druckverfahren wie Offsetdruck, Hochdruck, Flexodruck, Tiefdruck oder Siebdruck wird die Druckfarbe durch Kontakt einer mit Druckfarbe versehenen Druckplatte oder Druckform mit dem Bedruckstoff auf den Bedruckstoff übertragen. Druckfarben für diese Druckprozesse umfassen üblicherweise Lösemittel, Farbmittel, Bindemittel sowie verschiedene Additive, wie beispielsweise Weichmacher, Antistatika oder Wachse. Druckfarben für mechanische Druckverfahren umfassen pastöse Druckfarben mit hoher Viskosität für den Offset- und Hochdruck sowie Flüssigdruckfarben mit vergleichsweise niedriger Viskosität für den Flexo- und Tiefdruck. Weitere Einzelheiten sind beispielsweise offenbart in "Printing Inks" - Ullmann's Encyclopedia of Industrial Chemistry, Sixth Edition, 1999 Electronic Release.

Drucklacke können als Grundierung auf den Bedruckstoff aufgetragen (so genannte "primer") oder nach dem Druckvorgang als Überzug auf den bedruckten Bedruckstoff aufgetragen werden. Primer werden beispielsweise zur Verbesserung der Haftung auf dem Bedruckstoff aufgetragen. Als Überzug dienen Drucklacke beispielsweise zum Schutz des Druckbildes, zu ästhetischen Zwecken oder zur Steuerung von Anwendungseigenschaften. So können z.B. die Rauigkeit der Oberfläche, die elektrischen Eigenschaften oder die Beschlagbarkeit mit Wasserdampf durch geeignet formulierte Drucklacke beeinflusst werden. Die Auftragung von Drucklacken erfolgt üblicherweise in-line mittels eines Lackierwerkes an der Druckmaschine. Drucklacke enthalten kein Farbmittel, sind aber abgesehen davon im Regelfalle ähnlich wie Druckfarben zusammengesetzt.

Druckfarben werden auch in Mehrschichtmaterialien eingesetzt. Mehrschichtmaterialien bestehen aus zwei oder mehreren Kunststofffolien, beispielsweise Polyolefinfolien, Metallfolien oder metallisierten Kunststofffolien, die beispielsweise durch Laminieren oder mit Hilfe geeigneter Kaschierkleber, miteinander verbunden werden. Die Verbunde können noch weitere funktionale Schichten, beispielweise Geruchssperrschichten oder Wasserdampfsperren umfassen.

Mehrschichtmaterialien zum Herstellen von Verpackungen sind üblicherweise bedruckt oder beschichtet. Die Druckfarbe kann dabei auf die Oberfläche des Mehrschichtmaterials aufgebracht sein, sie kann sich aber insbesondere auch zwischen zwei Folien
befinden. Dem Fachmann ist bekannt, dass ein möglichst geringer Restlösemittelgehalt in der getrockneten Druckschicht wichtig für eine gute Festigkeit des Verbundes ist.

Druckfarben enthalten neben Bindemittel, Lösemittel und Farbmitteln üblicherweise verschiedene Hilfsmittel oder Additive. Derartige Hilfsmittel oder Additive dienen insbesondere der Feinsteuerung der anwendungstechnischen Eigenschaften der Druckfarbe, wie beispielsweise Haftung, Abriebfestigkeit, Trocknungsgeschwindigkeit oder Gleitfähigkeit.

Weichmacher sorgen beispielsweise für verbesserte Elastizität des Farbfilms auf dem Bedruckstoff. Dies ist insbesondere beim Drucken auf nicht saugenden Bedruckstoffen, wie beispielsweise Polymer- oder Metallfolien wichtig, denn hier kann die Druckfarbe naturgemäß nicht in den Bedruckstoff eindringen, sondern nach dem Abdampfen des Lösemittels verbleibt ein getrockneter Film auf dem Bedruckstoff. Druckfarben für derartige Bedruckstoffe müssen daher sehr gute filmbildende Eigenschaften sowie eine ganz besonders gute Abrieb- und Haftfestigkeit aufweisen, damit sich der Druckfilm bei mechanischer Beanspruchung nicht wieder vom Untergrund ablöst.

Es ist bekannt, in Druckfarben Weichmacher, beispielweise Phthalsäurediester, wie beispielsweise Dibutylphthalat oder Citronensäureester wie beispielsweise Acetyltributylcitrat einzusetzen.

Phthalsäurediestern wird jedoch seit kurzer Zeit nachgesagt, dass sie gesundheitlich nicht unbedenklich sind. Es ist daher beispielsweise von WO 99/32427, WO 03/29339, DE 200 21 356, DE-A 28 23 165 oder DE-A 12 63 296 vorgeschlagen worden, Cyclohexanpolycarbonsäuren und Derivate davon als Weichmacher für Kunststoffe zu verwenden.

Die ältere, nicht vorveröffentlichte Anmeldung WO 03/29339 offenbart die Verwendung von Cyclohexancarbonsäurediestern mit C₂ bis C₆ Alkoholen als Co-Lösemittel in Offsetdruckfarben.

Die nachveröffentlichte EP 1 416 023 A1 offenbart eine flüssige elektrophotographische Tinte enthaltend einen flüssigen Träger, ein polymeres Bindemittel, ein Farb mittel und ein fluides Material. Als geeignetes fluides Material werden ganz allgemein Cyclohexancarboxylate genannt. Diese werden nicht näher spezifiziert.

Die Verwendung Cyclohexanpolycarbonsäurederivaten als Weichmacher in Druckfarben, insbesondere Verpackungsdruckfarben, war jedoch bislang noch nicht bekannt.

Aufgabe der Erfindung war es, verbesserte Verpackungsdruckfarben, bereitzustellen und die Herstellkosten zu senken.

Dementsprechend wurden Verpackungsdruckfarben gefunden, welche mindestens ein Lösemittel oder ein Gemisch verschiedener Lösemittel, mindestens ein Farbmittel, mindestens ein polymeres Bindemittel sowie einen oder mehrere Zusatzstoffe umfassen, wobei es sich bei mindestens einem der Zusatzstoffe um ein Cyclohexanpolycarbonsäurederivat handelt, ausgewählt aus der Gruppe bestehend aus
- gemischten Estern der Cyclohexan-1,2-dicarbonsäure mit C1 bis C13-Alkoholen;
- Cyclohexan-1,2-dicarbonsäuredi(isopentyl)estern, erhältlich durch Hydrierung von Di(isopentyl)phthalat mit der Chemical Abstracts Registry Nummer (im folgenden: CAS Nr.) 84777-06-0; Cyclohexan-1,2-dicarbonsäuredi(isoheptyl)estern, erhältlich durch Hydrierung von Di(isoheptyl)phthalat mit der CAS Nr. 71888-89-6;
   Cyclohexan-1,2-dicarbonsäuredi(isononyl)estern, erhältlich durch Hydrierung eines Di(isononyl)phthalats mit der CAS Nr. 68515-48-0;
   Cyclohexan-1,2-dicarbonsäuredi(isononyl)estern, erhältlich durch Hydrierung eines Di(isononyl)phthalats mit der CAS Nr. 28553-12-0, basierend auf n-Buten;
   Cyclohexan-1,2-dicarbonsäuredi(isononyl)estern, erhältlich durch Hydrierung eines Di(isononyl)phthalats mit der CAS Nr. 28553-12-0 basierend auf Isobuten;
   einen 1,2-Di-C₉-Ester der Cyclohexandicarbonsäure, erhältlich durch Hydrierung eines Di(nonyl)phthalats mit der CAS Nr. 68515-46-8;
   einen Cyclohexan-1,2-dicarbonsäuredi(isodecyl)ester, erhältlich durch Hydrierung eines Di(isodecyl)phthalats mit der CAS Nr. 68515-49-1;
   einen 1,2-Di-C₇₋₁₁-Ester der Cyclohexandicarbonsäure, erhältlich durch Hydrierung des entsprechenden Phthalsäureesters mit der CAS Nr. 68515-42-4;
   einen 1,2-Di-C₇₋₁₁-Ester der Cyclohexandicarbonsäure, erhältlich durch Hydrierung der Di-C₇₋₁₁-Phthalate mit folgenden CAS Nr.
   111 381-89-6,
   111 381 90-9,
   111 381 91-0,
   68515-44-6,
   68515-45-7 und
   3648-20-7;
   einen 1,2-Di-C₉₋₁₁-Ester der Cyclohexandicarbonsäure, erhältlich durch Hydrierung eines Di-C₉₋₁₁-Phthalats mit der CAS Nr. 98515-43-5;
   einen 1,2-Di(isodecyl)cyclohexandicarbonsäureester, erhältlich durch Hydrierung eines Di(isodecyl)phthalats, das hauptsächlich aus Di-(2-propylheptyl)phthalt besteht;
   einen 1,2-Di-C₇₋₉-Cyclohexandicarbonsäureester, erhältlich durch Hydrierung des entsprechenden Phthalsäureesters der verzweigtkettige oder lineare C₇₋₉- Alkylestergruppen aufweist; entsprechende beispielsweise als Ausgangsprodukte verwendbare Phthalate haben die folgende CAS Nr.:
   Di-C₇₋₉-Alkylphthalat mit der CAS Nr. 111 381-89-6;
   Di-C₇-Alkylphthalat mit der CAS Nr. 68515-44-6; und
   Di-C₉-Alkylphthalat mit der CAS Nr. 68515-45-7.
- Hydrierprodukten von Phthalsäure-Mischestern mit C₁₀- und C₁₃-Alkohofen;
- Cyclohexan-1,2-dicarbonsäurealkylestern, wie z.B. Cyclohexan-1,2-dicarbonsäuremonomethylester, Cyclohexan-1,2-dicarbonsäuredimethyl-ester, Cyclohexan-1,2-dicarbonsäurediethylester, Cyclohexan-1,2-dicarbonsäuredi-n-propylester, Cyclohexan-1,2-dicarbonsäuredi-n-butylester, Cyclohexan-1,2-dicarbonsäuredi-tert.-butylester, Cyclohexan-1,2-dicarbonsäurediisobutylester, Cyclohexan-1,2-dicarbonsäuremonoglykolester, Cyclohexan-1,2-dicarbonsäurediglykolester, Cyclohexan-1,2-dicarbonsäuredin-octytester, Cyclohexan-1,2-dicarbonsäurediisooctylester, Cyclohexan-1,2-dicarbonsäuredi-2-ethylhexylester, Cyclohexan-1,2-dicarbonsäuredi-n-nonylester, Cyclohexan-1,2-dicarbonsäurediisononylester, Cyclohexan-1,2-dicarbonsäuredi-n-decylester, Cyclohexan-1,2-dicarbonsäurediisodecylester, Cyclohexan-1,2-dicarbonsäuredi-n-undecylester, Cyclohexan-1,2-dicarbonsäurediisododecylester, Cyclohexan-1,2-dicarbonsäuredi-n-octadecylester, Cyclohexan-1,2-dicarbonsäurediisooctadecylester, Cyclohexan-1,2-dicarbonsäuremono-cyclohexylester, Cyclohexan-1,2-dicarbonsäuredicyclohexylester, Cyclohexan-1,2-dicarbonsäurediisopropylester, Cyclohexan-1,2-dicarbonsäuredi-n-hexylester, Cydohexan-1,2-dicarbonsäurediisohexylester, Cyclohexan-1,2-dicarbonsäuredi-n-heptylester, Cyclohexan-1,2-dicarbonsäurediisoheptylester, Cyclohexan-1,2-dicarbonsäuredi-2-propylheptylester, Cyclohexan-1,2-dicarbonsäurediisoundecylester, Cyclohexan-1,2-dicarbonsäuredi-n-dodecylester, Cyclohexan-1,2-dicarbonsäuredi-n-tridecylester, Cyclohexan-1,2-dicarbonsäurediisotridecylester, Cyclohexan-1,2-dicarbonsäuredi-n-pentylester, Cyclohexan-1,2-dicarbonsäurediisopentylester;
- den Hydrierungsprodukten der kommerziell erhältlichen Benzolcarbonsäure-ester mit den Handelsnamen Jayflex DINP (CAS Nr. 68515-48-0), Jayflex DIDP (CAS Nr. 68515-49-1), Vestinol 9 (CAS Nr. 28553-12-0), TOTM-I (CAS Nr. 3319-31-1), Linplast 68-TM, Palatinol N (CAS Nr. 28553-12-0), Jayflex DHP (CAS Nr. 68515-50-4), Jayflex DIOP (CAS Nr. 27554-26-3), Jayflex UDP (CAS Nr. 68515-47-9), Jayflex DIUP (CAS Nr. 85507-79-5), Jayflex DTDP (CAS Nr. 68515-47-9), Jayflex L9P (CAS Nr. 68515-45-7), Jayflex L911P (CAS Nr. 68515-43-5), Jayflex L11P (CAS Nr. 3648-20-2), Witamol 110 (CAS Nr. 90193-91-2), Witamol 118 (Di-n-C₈-C₁₀-alkylphthalat), Unimoll BB (CAS Nr. 85-68-7), Linplast 1012 BP (CAS Nr. 90193-92-3), Linplast 13 XP (CAS Nr. 27253-26-5), Linplast 610 P (CAS Nr. 68515-51-5), Linplast 68 FP (CAS Nr. 68648-93-1) und Linplast 812 HP (CAS Nr. 70693-30-0), Palatinol AH (CAS Nr. 117-81-7), Palatinol 711 (CAS Nr. 68515-42-4), Palatinol 911 (CAS Nr. 68515-43-5), Palatinol 11 (CAS Nr. 3648-20-2). Palatinol Z (CAS Nr. 26761-40-0) und Palatinol DIPP (CAS Nr. 84777-06-0).
wobei der Anteil des Cyclohexanpolycarbonsäurederivates 0,1 bis 3 Gew.-% bezüglich der Summe aller Bestandteile der Druckfarbe beträgt.

Weiterhin wurden Drucklacke gefunden, die keine Farbmittel enthalten, welche mindestens ein Lösemittel oder ein Gemisch verschiedener Lösemittel, mindestens ein polymeres Bindemittel sowie einen oder mehrere Zusatzstoffe umfassen, wobei es sich bei mindestens einem der Zusatzstoffe um ein Cyclohexanpolycarbonsäurederivat handelt, ausgewählt aus der Gruppe bestehend aus
- gemischten Estern der Cyclohexan-1,2-dicarbonsäure mit C1 bis C13-Alkoholen;
- Cyclohexan-1,2-dicarbonsäuredi(isopentyl)estern, erhältlich durch Hydrierung von Di(isopentyl)phthalat mit der Chemical Abstracts Registry Nummer (im folgenden: CAS Nr.) 84777-06-0;
   Cyclohexan-1,2-dicarbonsäuredi(isoheptyl)estern, erhältlich durch Hydrierung von Di(isoheptyl)phthalat mit der CAS Nr. 71888-89-6;
   Cyclohexan-1,2-dicarbonsäuredi(isononyl)estern, erhältlich durch Hydrierung eines Di(isononyl)phthalats mit der CAS Nr. 68515-48-0;
   Cyclohexan-1,2-dicarbonsäuredi(isononyl)estern, erhältlich durch Hydrierung eines Di(isononyl)phthalats mit der CAS Nr. 28553-12-0, basierend auf n-Buten;
   Cyclohexan-1,2-dicarbonsäuredi(isononyl)estern, erhältlich durch Hydrierung eines Di(isononyl)phthalats mit der CAS Nr. 28553-12-0 basierend auf Isobuten;
   einen 1,2-Di-C₉-Ester der Cyclohexandicarbonsäure, erhältlich durch Hydrierung eines Di(nonyl)phthalats mit der CAS Nr. 68515-46-8;
   einen Cyclohexan-1,2-dicarbonsäuredi(isodecyl)ester erhältlich durch Hydrierung eines Di(isodecyl)phthalats mit der CAS Nr. 68515-49-1;
   einen 1,2-Di-C₇₋₁₁-Ester der Cyclohexandicarbonsäure, erhältlich durch Hydrierung des entsprechenden Phthalsäureesters mit der CAS Nr. 68515-42-4;
   einen 1,2-Di-C₇₋₁₁-Ester der Cyclohexandicarbonsäure, erhältlich durch Hydrierung der Di-C₇₋₁₁-Phthalate mit folgenden CAS Nr.
   111 381-89-6,
   111 381 90-9,
   111 381 91-0,
   68515-44-6,
   68515-45-7 und
   3648-20-7;
   einen 1,2-Di-C₉₋₁₁-Ester der Cyclohexandicarbonsäure, erhältlich durch Hydrierung eines Di-C₉₋₁₁-Phthalats mit der CAS Nr. 98515-43-5;
   einen 1,2-Di(isodecyl)cyclohexandicarbonsäureester, erhältlich durch Hydrierung eines Di(isodecyl)phthalats, das hauptsächlich aus Di-(2-propylheptyl)phthalt besteht;
   einen 1,2-Di-C₇₋₉-Cyclohexandicarbonsäureester, erhältlich durch Hydrierung des entsprechenden Phthalsäureesters der verzweigtkettige oder lineare C₇₋₉- Alkylesterpruppen aufweist; entsprechende beispielsweise als Ausgangsprodukte verwendbare Phthalate haben die folgende CAS Nr.:
   Di-C₇₋₉-Alkylphthalat mit der CAS Nr. 111 381-89-6;
   Di-C₇-Alkylphthalat mit der CAS Nr. 68515-44-6; und
   Di-C₉-Alkylphthalat mit der CAS Nr. 68515-45-7.
- Hydrierprodukten von Phthalsäure-Mischestern mit C₁₀- und C₁₃-Akoholen;
- Cyclohexan-1,2-dicarbonsäurealkylestern, wie z.B. Cyclohexan-1,2-dicarbonsäuremonomethylester, Cyclohexan-1,2-dicarbonsäuredimethylester, Cyclohexan-1,2-dicarbonsäurediethylester, Cyclohexan-1,2-dicarbonsäuredi-n-propylester, Cyclohexan-1,2-dicarbonsäuredi-n-butylester, Cyclohexan-1,2-dicarbonsäuredi-tert.-butylester, Cyclohexan-1,2-dicarbonsäurediisobutylester, Cyclohexan-1,2-dicarbonsäuremonoglykolester, Cyclohexan-1,2-dicarbonsäurediglykolester, Cyclohexan-1,2-dicarbonsäuredi-n-octylester, Cyclohexan-1,2-dicarbotisäurediisooctylester, Cyclohexan-1,2-dicarbonsäuredi-2-ethylhexylester, Cyclohexan-1,2-dicarbonsäuredi-n-nonylester, Cyclohexan-1,2-dicarbonsäurediisononylester, Cyclohexan-1,2-dicarbonsäuredi-n-decylester, Cyclohexan-1,2-dicarbonsäurediisodecylester, Cyclohexan-1,2-dicarbonsäuredi-n-undecylester, Cyclohexan-1,2-dicarbonsäurediisododecylester, Cyclohexan-1,2-dicarbonsäuredi-n-octadecylester, Cyclohexan-1,2-dicarbonsäurediisooctadecylester, Cyclohexan-1,2-dicarbonsäuremono-cyclohexylester, Cyclohexan-1,2-dicarbonsäuredicyclohexylester, Cyclohexan-1,2-dicarbonsäurediisopropylester, Cyclohexan-1,2-dicarbonsäuredi-n-hexylester, Cyclohexan-1,2-dicarbonsäurediisohexylester, Cyclohexan-1,2-dicarbonsäuredi-n-heptylester, Cyclohexan-1,2-dicarbonsäurediisoheptylester, Cyclohexan-1,2-dicarbonsäuredi-2-propylheptylester, Cyclohexan-1,2-dicarbonsäurediisoundecylester, Cyclohexan-1,2-dicarbonsäuredi-n-dodecylester, Cyclohexan-1,2-dicarbonsäuredi-n-tridecylester, Cyclohexan-1,2-dicarbonsäurediisotrdecylester, Cyclohexan-1,2-dicarbonsäuredi-n-pentylester, Cyclohexan-1,2-dicarbonsäurediisopentylester;
- den Hydrierungsprodukten der kommerziell erhältlichen Benzolcarbonsäure-ester mit den Handelsnamen Jayflex DINP (CAS Nr. 68515-48-0), Jayflex DIDP (CAS Nr. 68515-49-1), Vestinol 9 (CAS Nr. 28553-12-0), TOTM-I (CAS Nr. 3319-31-1), Linplast 68-TM, Palatinol N (CAS Nr. 28553-12-0), Jayflex DHP (CAS Nr. 68515-50-4), Jayflex DIOP (CAS Nr. 27554-26-3), Jayflex UDP (CAS Nr. 68515-47-9), Jayflex DIUP (CAS Nr. 85507-79-5), Jayflex DTDP (CAS Nr. 68515-47-9), Jayflex L9P (CAS Nr. 68515-45-7), Jayflex L911P (CAS Nr. 68515-43-5), Jayflex L11P (CAS Nr. 3648-20-2), Witamol 110 (CAS Nr. 90193-91-2), Witamol 118 (Di-n-C₈-C₁₀-alkylphthalat), Unimoll BB (CAS Nr. 85-66-7), Linplast 1012 BP (CAS Nr. 90193-92-3), Linplast 13 XP (CAS Nr. 27253-26-5), Linplast 610 P (CAS Nr. 68515-51-5), Linplast 68 FP (CAS Nr. 68648-93-1) und Linplast 812 HP (CAS Nr. 70693-30-0), Palatinol AH (CAS Nr. 117-81-7), Palatinol 711 (CAS Nr. 68515-42-4), Palatinol 911 (CAS Nr. 68515-43-5), Palatinol 11 (CAS Nr. 3648-20-2), Palatinol Z (CAS Nr. 26761-40-0) und Palatinol DIPP (CAS Nr. 84777-06-0).
und Gemischen aus zwei oder mehr davon.

Überraschenderweise wurde gefunden, dass durch die Verwendung von Cyclohexanpolycarbonsäure-Derivaten anstelle konventioneller Weichmacher Verpackungsdruckfarben mit verbesseren Eigenschaften erhalten werden, die sich zudem deutlich ökonomischer herstellen lassen. Zum einen wird der in der Verpackungsdruckfarbe verbleibende Restlösemittelanteil geringer. Somit lassen sich Mehrschichtmaterialien mit verbesserter Verbundfestigkeit zwischen den einzelnen Schichten erhalten. Außerdem wird der Geruch des Verbundes reduziert. Dies ist besonders wichtig für Lebensmittelverpackungen. Zum anderen wird bereits mit ca. 50% der Menge kanventoneller Weichmacher die gleiche Wirkung im Hinblick auf Flexibilität, Verdruckbarkeit und Überdruckbarkeitder Verpackungsdruckfarbe erzielt. Derartige Verpackungsdruckfarben lassen sich somit deutlich billiger herstellen. Besonders vorteilhaft werden trotz der Reduktion der Weichmachermenge keine der anderen wichtigen Anwendungseigenschaften der Verpackungsdruckfarbe, wie beispielsweise Haftung, Glanz, Abrieb, Viskostabilität verschlechtert.

Überraschenderweise wurde gefunden, dass durch die Verwendung von Cyclohexanpolycarbonsäure-Derivaten anstelle konventioneller Weichmacher, Verpackungsdruckfarben mit verbesserten Eigenschaften erhalten werden, die sich zudem deutlich ökonomischer herstellen lassen. Zum einen wird der in der Verpackungsdruckfarbe verbleibende Restlösemittelanteil geringer. Somit lassen sich Mehrschichtmaterialien mit verbesserter Verbundfestigkeit zwischen den einzelnen Schichten erhalten. Außerdem wird der Geruch des Verbundes reduziert. Dies ist besonders wichtig für Lebensmittelverpackungen. Zum anderen wird bereits mit ca. 50% der Menge konventioneller Weichmacher die gleiche Wirkung im Hinblick auf Flexibilität, Verdruckbarkeit und Überdruckbarkeit der Verpackungsdruckfarbe erzielt. Derartige Verpackungsdruckfarben lassen sich somit deutlich billiger herstellen. Besonders vorteilhaft werden trotz der Reduktion der Weichmachermenge keine der anderen wichtigen Anwendungseigenschaften der Verpackungsdruckfarbe, wie beispielsweise Haftung, Glanz, Abrieb, Viskostabilität verschlechtert.

Zu der Erfindung ist im Einzelnen das Folgende auszuführen:

Erfindungsgemäß handet es sich um eine Verpackungsdruckfarbe.

Der Begriff "Verpackungsdruckfarbe" ist selbsterklärend und beschränkend zugleich. Bei Verpackungsdruckfarben handelt es sich um dünnflüssige, schnell trocknende Druckfarben, insbesondere für den Tief- und/oder Flexodruck sowie ggf. auch für den Siebdruck, welche zum Bedrucken von Kunststofffolien aller Art, Verbundmaterialien, Papier, Karton oder Metallfolien verwendet werden. Sie enthalten dementsprechend relativ niedrig siedende Lösemittel. Der Siedepunkt der eingesetzten Lösemittel beträgt im Regelfalle nicht mehr als 140°C. Siebdruckfarben sind ähnlich formuliert wie Flexo- oder Tiefdruckfarben, sie sind lediglich etwas viskoser eingestellt und weisen üblicherweise Lösemittel mit etwas höheren Siedepunkten auf. Bei den erfindungsgemäßen Verpackungsdruckfarben oder Drucklacken kann es sich auch um strahlungshärtbare Verpackungsdruckfarben handeln.

Die Art des Lösemittels oder des Lösemittelgemisches richtet sich nach dem jeweiligen Verwendungszweck der Verpackungsdruckfarbe oder des Drucklackes. Der Fachmann trifft unter den prinzipiell möglichen Lösemitteln eine geeignete Auswahl. Beispiele für Lösemittel bzw. Komponenten von Lösemittelgemischen umfassen Kohlenwasserstoffe wie Toluol oder Xylol, hochsiedende Mineralöle oder pflanzliche Öle wie beispielsweise Sojaöl. Weiterhin geeignet sind Alkohole wie beispielsweise Methanol, 1-Propanol, 2-Propanol, Ethylenglykol, Propylenglykol, Diethylenglykol, substituierte Alkohol wie beispielsweise Ethoxypropanol, Ester wie beispielsweise Ethylacetat, Isopropylacetat, n-Propyl oder n-Butylacetat. Es können selbstverständlich auch Gemische verschiedener Lösungsmittel eingesetzt werden. Als Lösungsmittel sind auch wässrige Lösemittelgemische prinzipiell geeignet. Je nach Art der Verpackungsdruckfarbe der des Drucklackes werden üblicherweise 10 bis 80 Gew.% Lösemittel bezüglich der Summe aller Bestandteile eingesetzt.

Für Verpackungsdruckfarben bevorzugte Lösemittel umfassen insbesondere niedrig siedende Lösemittel wie Ethanol, 1-Propanol oder 2-Propanol, substituierte Alkohole wie beispielsweise Ethoxypropanol oder Ester wie beispielsweise Ethylacetat.

Strahlungshärtbare Verpackungsdruckfarben enthalten als Lösemittel zum Einstellen der Viskosität im allgemeinen nicht die oben genannten, sondern Reaktiwerdünner. Beispiele umfassen Beispiele umfassen Butylacrylat, (2-Ethylhexyl)acrylat, sowie insbesondere mehrfunktionelle Acrylate wie 1,4-Butandioldi(meth)acrylat, 1,6-Hexandioldi(meth)acrylat oder Trimethylolpropantri(meth)acrylat.

Als Farbmittel können die für Verpackungsdruckfarben üblichen Farbstoffe, insbesondere übliche Pigmente eingesetzt werden. Beispiele sind anorganische Pigmente wie beispielsweise Titandioxid-Pigmente oder Eisenoxidpigmente, Interferenzpigmente, Ruße, Metallpulver wie insbesondere Aluminium, Messing oder Kupferpulver, sowie organische Pigmente wie Azo-, Phthalocyanin oder Isoindolin-Pigmente. Es können selbstverständlich auch Gemische verschiedener Farbstoffe oder Farbmittel eingesetzt werden. Es können auch löslich organische Farbstoffe eingesetzt werden. Die Menge an Farbmittel beträgt üblicherweise 5 - 25 Gew. % bezüglich der Summe aller Bestandteile der Verpackungsdruckfarbe. Drucklacke enthalten naturgemäß kein Farbmittel.

Als Bindemittel für die erfindungsgemäßen Verpackungsdruckfarben und Drucklacke können prinzipiell die für Verpackungsdruckfarben üblichen Bindemittel eingesetzt werden. Beispiele geeigneter Bindemittel umfassen Polyester, Polyamide, PVC-Copolymerisate, aliphatische und aromatische Ketonharze, Melamin-Harnstoff-Harze, Melamin-Formaldehyd-Harze, Maleinate, Kolophoniumderivate, Casein bzw. Casein-Derivate, Ethylcellulose, Nitrocellulose oder aromatische bzw. aliphatische Polyurethane. Es können auch Polymere oder Copolymere von Vinylacetat, Vinylalkohol, Acrylaten, Methacrylaten, Vinylpyrolidon oder Vinylacetalen eingesetzt werden. Von besonderem Vorteil können funktionelle Gruppen aufweisende hyperverzweigte Polymere, beispielsweise hyperverzweigte Polyurethane, Polyharnstoffe oder Polyesteramide eingesetzt werden, wie von WO 02/36695 und WO 02/36697 offenbart. Es können selbstverständlich auch Gemische verschiedener polymerer Bindemittel eingesetzt werden, vorausgesetzt, die ausgewählten Bindemittel weisen in Kombination miteinander keine unerwünschten Eigenschaften auf. Die Menge aller Bindemittel beträgt üblicherweise 5 - 20 Gew. % bzgl. der Summe aller Bestandteile der Verpackungsdruckfarbe.

Für Verpackungsdruckfarben besonders bevorzugte Bindemittel umfassen beispielsweise Nitrocellulose, Ethylcellulose, Hydroxyethylcellulose sowie aliphatische und aromatische Polyurethane und Polyharnstoffe, insbesondere hyperverzweigte Polyurethane und Polyharnstoffe sowie Mischungen davon.

Besonders bewährt für Verpackungsdruckfarben, insbesondere zum Bedrucken von Kunststofffolien und Metallfolien haben sich Kombinationen von mindestens zwei verschiedenen Bindemitteln. Zu nennen sind insbesondere Kombinationen aus Nitrocellulose und sekundären Bindemitteln, beispielsweise Kombinationen aus Nitrocellulose und Polyurethanen und/oder Polyharnstoffen, ganz besonders hyperverzweigten Polyharnstoffen und Polyurethanen.

Geeignete Lösemittel für diese Bindemittel sind insbesondere Alkohole und/oder Ester.

Strahlungshärtbare Verpackungsdruckfarben umfassen Bindemittel, die vernetzbare Gruppen umfassen, wie beispielsweise olefinische Gruppen, Vinylether- oder Epoxidgruppen.

Die erfindungsgemäßen Verpackungsdruckfarben bzw. Drucklacke umfassen weiterhin einen oder mehrere Hilfsstoffe beziehungsweise Additive. Beispiele für Additive und Hilfsstoffe sind Füllstoffe wie Calciumcarbonat, Aluminiumoxidhydrat oder Aluminium- bzw. Magnesiumsilikat. Wachse erhöhen die Abriebfestigkeit und dienen der Erhöhung der Gleitfähigkeit. Beispiele sind insbesondere Polyethylenwachse, oxidierte Polyethylenwachse, Petroleumwachse oder Ceresinwachse. Fettsäureamide können zur Erhöhung der Oberflächenglätte eingesetzt werden. Weichmacher dienen der Erhöhung der Elastizität des getrockneten Films. Für strahlungshärtbare Verpackungsdruckfarben wird als Additiv weiterhin mindestens ein Fotoinitiator oder ein Fotoinitiatorsystem eingesetzt. Zum Dispergieren der Pigmente können Dispergierhilfsmittel eingesetzt werden. Die Gesamtmenge aller Additive und Hilfsstoffe übersteigt üblicherweise nicht 20 Gew. % bezüglich der Summe aller Bestandteile und beträgt bevorzugt 0,1 - 10 Gew. %, besonders bevorzugt 0,5-5 Gew.-%.

Erfindungsgemäß handelt es sich bei mindestens einem der Hilfsstoffe um mindestens ein Cyclohexanpolycarbonsäurederivat, ausgewählt aus der Gruppe bestehend aus
- gemischten Estern der Cyclohexan-1,2-dicarbonsäure mit C1 bis C13-Alkoholen;
- Cyclohexan-1,2-dicarbonsäuredi(isopentyl)estern, erhältlich durch Hydrierung von Di(isopentyl)phthalat mit der Chemical Abstracts Registry Nummer (im folgenden: CAS Nr.) 84777-06-0;
   Cyclohexan-1,2-dicarbonsäuredi(isoheptyl)estern, erhältlich durch Hydrierung von Di(isoheptyl)phthalat mit der CAS Nr. 71888-89-6;
   Cyclohexan-1,2-dicarbotisäuredi(isononyl)estern, erhältlich durch Hydrierung eines Di(isononyl)phthalats mit der CAS Nr. 68515-48-0;
   Cyclohexan-1,2-dicarbonsäuredi(isononyl)estern, erhältlich durch Hydrierung eines Di(isononyl)phthalats mit der CAS Nr. 28553-12-0, basierend auf n-Buten;
   Cyclohexan-1,2-dicarbonsäuredi(isononyl)estern, erhältlich durch Hydrierung eines Di(isononyl)phthalats mit der CAS Nr. 28553-12-0 basierend auf Isobuten;
   einen 1,2-Di-C₉-Ester der Cyclohexandicarbonsäure, erhältlich durch Hydrierung eines Di(nonyl)phthalats mit der CAS Nr. 68515-46-8;
   einen Cyclohexan-1,2-dicarbonsäuredi(isodecyl)ester erhältlich durch Hydrierung eines Di(isodecyl)phthalats mit der CAS Nr. 68515-49-1;
   einen 1,2-D₇₋₁₁-Ester der Cyclohexandicarbonsäure, erhältlich durch Hydrierung des entsprechenden Phthalsäureesters mit der CAS Nr. 68515-42-49;
   einen 1,2-Di-C₇₋₁₁-Ester der Cyclohexandicarbonsäure, erhältlich durch Hydrierung der Di-C₇₋₁₁-Phthalate mit folgenden CAS Nr.
   111 381-89-6,
   111 381 90-9,
   111 381 91-0,
   685 15-44-6,
   68515-45-7 und
   3648-20-7;
   einen 1,2-Di-C₉₋₁₁-Ester der Cyclohexandicarbonsäure, erhältlich durch Hydrierung eines Di-C₉₋₁₁-Phthalats mit der CAS Nr. 98515-43-5;
   einen 1,2-Di(isodecyl)cyclohexandicarbonsäureester, erhältlich durch Hydrierung eines Di(isodecyl)phthalats, das hauptsächlich aus Di-(2-propylheptyl)phthalt besteht;
   einen 1,2-Di-C₇₋₉-Cyclohexandicarbonsäureester, erhältlich durch Hydrierung des entsprechenden Phthalsäureesters der verzweigtkettige oder lineare C₇₋₉-Alkylestergruppen aufweist; entsprechende beispielsweise als Ausgangsprodukte verwendbare Phthalate haben die folgende CAS Nr.:
   Di-C_{7,9}-Alkylphthalat mit der CAS Nr. 111 381-89-6;
   Di-C₇-Alkylphthalat mit der CAS Nr. 68515-44-6; und
   Di-C₉-Alkylphthalat mit der CAS Nr. 68515-45-7.
- Hydrierprodukten von Phthalsäure-Mischestern mit C₁₀- und C₁₃-Alkoholen;
- Cyclohexan-1,2-dicarbonsäurealkylestern, wie z.B. Cyclohexan-1,2-dicarbonsäuremonomethylester, Cyclohexan-1,2-dicarbonsäuredimethylester, Cyclohexan-1,2-dicarbonsäurediethylester, Cyclohexan-1,2-dicarbonsäuredi-n-propylester, Cyclohexan-1,2-dicarbonsäuredi-n-butylester-Cyclohexan-1,2-dicarbonsäuredi-tert-butylester, Cyclohexan-1,2-dicarbonsäurediisobutylester, Cyclohexan-1,2-dicarbonsäuremonoglykolester, Cyclohexan-1,2-dicarbonsäurediglykolester, Cyclohexan-1,2-dicarbonsäuredi-n-octylester, Cyclohexan-12-dicarbonsäurediisooctylester, Cyclohexan-1,2-dicarbonsäuredi-2-ethylhexylester, Cyclohexan-1,2-dicarbonsäuredinnonylester, Cyclohexan-1,2-dicarbonsäurediisononylester, Cyclohexan-1,2-dicarbonsäuredi-n-decylester, Cyclohexan-1,2-dicarbonsäurediisodecylester, Cyctohexan-1,2-dicarbonsäuredi-n-undecylester, Cyclohexan-1,2-dicarbonsäurediisododecylester, Cyclohexan-1,2-dicarbonsäuredi-n-octadecylester, Cyclohexan-1,2-dicarbonsäurediisooctadecylester, Cyclohexan-1,2-dicarbonsäuremono-cyclohexylester, Cyclohexan-1,2-dicarbonsäuredicyclohexylester, Cyclohexan-1,2-dicarbonsäurediisopropylester, Cyclohexan-1,2-dicarbonsäuredi-n-hexylester, Cyclohexan-1,2-dicarbonsäurediisohexylester, Cyclohexan-1,2-dicarbonsäuredi-n-heptylester, Cyclohexan-1,2-dicarbonsäurediisoheptylester, Cyclohexan-1,2-dicarbonsäuredi-2-propylheptylester, Cyclohexan-1,2-dicarbonsäurediisoundecylester, Cyclohexan-1,2-dicarbonsäuredi-n-dodecylester, Cyclohexan-1,2-dicarbonsäuredi-n-tridecylester, Cyclohexan-1,2-dicarbonsäurediisotridecylester, Cyclohexan-1,2-dicarbonsäuredi-n-pentylester, Cyclohexan-1,2-dicarbonsäurediisopentylester;
- den Hydrierungsprodukten der kommerziell erhäitlichen Benzoicarbonsäure-ester mit den Handelsnamen Jayflex DINP (CAS Nr. 68515-48-0), Jayflex DIDP (CAS Nr. 68515-49-1), Vestinol 9 (CAS Nr. 28553-12-0), TOTM-I (CAS Nr. 3319-31-1), Linplast 68-TM, Palatinol N (CAS Nr. 28553-12-0), Jayflex DHP (CAS Nr. 68515-50-4), Jayflex DIOP (CAS Nr. 27554-26-3), Jayflex UDP (CAS Nr. 68515-47-9), Jayflex DIUP (CAS Nr. 85507-79-5), Jayflex DTDP (CAS Nr. 68515-47-9), Jayflex L9P (CAS Nr. 68515-45-7), Jayflex L911P (CAS Nr. 68515-43-5), Jayflex L11P (CAS Nr. 3648-20-2), Witamol 110 (CAS Nr. 90193-91-2), Witamol 118 (Di-n-C₈-C₁₀-alkylphthalat), Unimoll BB (CAS Nr. 85-68-7), Linplast 1012 BP (CAS Nr. 90193-92-3), Linplast 13 XP (CAS Nr. 27253-26-5), Linplast 610 P (CAS Nr. 68515-51-5), Linplast 68 FP (CAS Nr. 68648-93-1) und Linplast 812 HP (CAS Nr. 70693-30-0), Palatinol AH (CAS Nr. 117-81-7), Palatinol 711 (CAS Nr. 68515-42-4), Palatinol 911 (CAS Nr. 68515-43-5), Palatinol 11 (CAS Nr. 3648-20-2), Palatinol Z (CAS Nr. 26761-40-0) und Palatinol DIPP (CAS Nr. 84777-06-0).
und Gemischen aus zwei oder mehr davon, wobei der Anteil des Cyclohexanpolycarbonsäurederivates 0,1 bis 3 Gew.-% bezüglich der Summe aller Bestandteile der Verpackungsdruckfarbe beträgt.
Dieser Hilfsstoff wird bevorzugt als Weichmacher eingesetzt, hat aber auch noch andere vorteilhafte Effekte, wie beispielsweise eine Reduktion des Restlösemittelgehaltes zur Folge. Er kann aber vom Fachmann selbstverständlich auch eingesetzt werden, um andere Effekte zu erzielen.

Im Sinne der vorliegenden Erfindung geeignet sind darüber hinaus auch die in der WO 99/32427 offenbarten, im folgenden nochmals aufgelisteten Cyclohexan-1,2-dicarbonsäureester:
Cyclohexan-1,2-dicarbonsäuredi(isopentyl)ester, erhältlich durch Hydrierung von Di(isopentyl)phthalat mit der Chemical Abstracts Registry Nummer (im folgenden: CAS Nr.) 84777-06-0;
Cyclohexan-1,2-dicarbonsäuredi(isoheptyl)ester, erhältlich durch Hydrierung von Di(isoheptyl)phthalat mit der CAS Nr. 71888-89-6;
Cyclohexan-1,2-dicarbonsäuredi(isononyl)ester, erhältlich durch Hydrierung eines Di(isononyl)phthalats mit der CAS Nr. 68515-48-0;
Cyclohexan-1,2-dicarbonsäuredi(isononyl)ester, erhältlich durch Hydrierung eines Di(isononyl)phthalats mit der CAS Nr. 28553-12-0, basierend auf n-Buten;
Cyclohexan-1,2-dicarbonsäuredi(isononyl)ester, erhältlich durch Hydrierung eines Di(isononyl)phthalats mit der CAS Nr. 28553-12-0 basierend auf Isobuten;
ein 1,2-Di-C₉-Ester der Cyclohexandicarbonsäure, erhältlich durch Hydrierung eines Di(nonyl)phthalats mit der CAS Nr. 68515-46-8;
ein Cyclohexan-1,2-dicarbonsäuredi(isodecyl)ester erhältlich durch Hydrierung eines Di(isodecyl)phthalats mit der CAS Nr. 68515-49-1;
ein 1,2-Di-C₇₋₁₁-Ester der Cyclohexandicarbonsäure, erhältlich durch Hydrierung des entsprechenden Phthalsäureesters mit der CAS Nr. 68515-42-4;
ein 1,2-Di-C₇₋₁₁-Ester der Cyclohexandicarbonsäure, erhältlich durch Hydrierung der Di-C₇₋₁₁-Phthalate mit folgenden CAS Nr.
   111 381-89-6,
   111 381 90-9,
   111 381 91-0,
   68515-44-6,
   68515-45-7 und
   3648-20-7;
ein 1,2-(Di-C₉₋₁₁-Ester der Cyclohexandicarbonsäure, erhältlich durch Hydrierung eines Di-C₉₋₁₁-Phthalats mit der CAS Nr. 98515-43-5;
ein 1,2-Di(isodecyl)cyclohexandicarbonsäureester, erhältlich durch Hydrierung eines Di(isodecyl)phthalats, das hauptsächlich aus Di-(2-propylheptyl)phthalt besteht;
ein 1,2-Di-C₇₋₉-Cyclohexandicarbonsäureester, erhältlich durch Hydrierung des entsprechenden Phthalsäureesters der verzweigtkettige oder lineare C₇₋₉-Alkylester-gruppen aufweist; entsprechende beispielsweise als Ausgangsprodukte verwendbare Phthalate haben die folgende CAS Nr.:
   Di-C_{7,9}-Alkylphthalat mit der CAS Nr. 111 381-89-6;
   Di-C₇-Alkylphthalat mit der CAS Nr. 68515-44-6; und
   Di-C₉-Alkylphthalat mit der CAS Nr. 68515-45-7.

Der Inhalt der WO 99/32427, der sich auf diese soeben aufgelisteten Verbindungen und die Herstellung von Benzolpolycarbonsäuren unter Verwendung spezieller Makroporen aufweisender Katalysatoren bezieht, wird durch Bezugnahme in die vorliegende Anmeldung einbezogen.

Erfindungsgemäß sind auch Hydrierprodukte von Phthalsäure-Mischestern mit C₁₀- und C₁₃-Alkoholen verwendbar wie sie in der DE-A 10032580.7 beschrieben sind. Des weiteren sind auch die Hydrierungsprodukte der kommerziell erhältlichen Benzolcarbonsäureester mit den Handelsnamen Jayflex DINP (CAS Nr. 68515-48-0), Jayflex DIDP (CAS Nr. 68515-49-1), Palatinol 9-P, Vestinol 9 (CAS Nr. 28553-12-0), TOTM-I (CAS Nr. 3319-31-1), Linplast 68-TM, Palatinol N (CAS Nr. 28553-12-0), Jayflex DHP (CAS Nr. 68515-50-4), Jayflex DIOP (CAS Nr. 27554-26-3), Jayflex UDP (CAS Nr. 68515-47-9), Jayflex DIUP (CAS Nr. 85507-79-5), Jayflex DTDP (CAS Nr. 68515-47-9), Jayflex L9P (CAS Nr. 68515-45-7), Jayflex L911 P (CAS Nr. 68515-43-5), Jayflex L11P (CAS Nr. 3648-20-2), Witamol 110 (CAS Nr. 90193-91-2), Witamol 118 (Di-n-C8-C10-alkylphthalat), Unimoll BB (CAS Nr. 85-68-7), Linplast 1012 BP (CAS Nr. 90193-92-3), Linplast 13 XP (CAS Nr. 27253-26-5), Linplast 610 P (CAS Nr. 68515-51-5), Linplast 68 FP (CAS Nr. 68648-93-1) und Linplast 812 HP (CAS Nr. 70693-30-0), Palatinol AH (CAS Nr. 117-81-7), Palatinol 711 (CAS Nr. 68515-42-4), Palatinol 911 (CAS Nr. 68515-43-5), Palatinol 11 (CAS Nr. 3648-20-2), Palatinol Z (CAS Nr. 26761-40-0) und Palatinol DIPP (CAS Nr. 84777-06-0) als geeignet im Sinne der vorliegenden Erfindung zu bewerten.

Besonders bevorzugte Verpackungsdruckfarben umfassen Diester der 1,2 Dicyclohexancarbonsäure. Als Estergruppe bevorzugt sind geradkettige oder verzweigte Alkylgruppen mit 8 bis 13 C-Atomen. Beispielsweise kann es sich um Di-isononyl-cyclohexan-1,2-dicarboxylat handeln, welches unter dem Namen Hexamoll^{®} DINCH auch kommerziell erhältlich ist (Fa. BASF AG).

Die Menge der eingesetzten Cyclohexancarbonsäurederivate beträgt im Regelfalle 0,1 bis 3 Gew.-% bezüglich der Summe aller Bestandteile der Verpackungsdruckfarbe. Bevorzugt beträgt die Menge 0,5-2,5 Gew.-% und besonders bevorzugt 1-2 Gew.-%.

Bei gleicher Weichmacherwirkung wie bei konventionellen Weichmachern wird der Restlösemittelgehalt in der gedruckten Schicht signifikant verringert, und es werden bessere Druckeigenschaften erreicht.

Die Herstellung der erfindungsgemäßen Verpackungsdruckfarben bzw. Drucklacke kann in prinzipiell bekannter Art und Weise durch intensives Vermischen bzw. Dispergieren der Bestandteile in üblichen Apparaturen wie beispielsweise Dissolvern, Rührwerkskugelmühlen oder einem Dreiwalzenstuhl erfolgen. Vorteilhaft wird zunächst eine konzentrierte Pigmentdispersion (auch Pigmentpräparation genannt) mit einem Teil der Komponenten hergestellt, die später mit weiteren Bestandteilen und weiterem Lösemittel zur fertigen Druckfarbe weiter verarbeitet wird.

Die erfindungsgemäßen Verpackungsdruckfarben können zum Bedrucken von Substraten aller Art eingesetzt werden. Sie können insbesondere zum Bedrucken von Kunststoff- und Metallfolien eingesetzt werden. Sie können weiterhin zum Herstellen von Mehrschichtmaterialien für Verpackungen verwendet werden.

Die erfindungsgemäßen Drucklacke können insbesondere zum Grundieren von Kunststoff- oder Metallfolien, als Schutzschicht oder als Vergütungsschicht eingesetzt werden. Sie können weiterhin zum Herstellen von Mehrschichtmaterialien für Verpackungen verwendet werden.

Bei den Kunststofffolien kann es sich insbesondere um Polyolefin-Folien wie Folien aus Polyethylen, Polypropylen oder Poly(4-Methyl-1-penten) oder Polystyrol handeln. Bei Polyethylen-Folien kann es sich um Folien aus HDPE, LDPE oder LLDPE handeln. Es kann sich auch um Copolymere wie beispielsweise um Folien aus Ethylen-Vinylacetat-Copolymeren, Ethylen-Acrylsäure-Copolymeren oder Styrol/Butadien-Copolymeren handeln. Weiterhin können Folien aus PVC oder Polycarbonaten oder Folien aus polaren Materialien eingesetzt werden, beispielsweise Cellophan-Folien, Polyester-Folien, wie beispielsweise solche aus Polyethylenterephthalat, Polybutylenterephthalat oder Polyethylennaphthalat oder Polyamid-Folien, wie beispielsweise Folien aus PA 6, PA 12, PA 6/66, PA 6/12 oder PA 11.

Beispiele für Metallfolien umfassen insbesondere Aluminiumfolien, es kann sich beispielsweise aber auch um Zinnfolien, Kupferfolien oder Goldfolien handeln.

Mehrschichtmaterialien zum Herstellen von Verpackungen, insbesondere Lebensmittelverpackungen umfassen mindestens zwei Folien. Es kann sich dabei insbesondere um die eingangs Genannten handeln. Sie können beispielsweise durch Laminieren oder mit Hilfe geeigneter Kaschierkleber miteinander verbunden werden. Die Verbunde können noch weitere funktionale Schichten, beispielweise Geruchssperrschichten oder Wasserdampfsperren umfassen. Nähere Einzelheiten zum Aufbau derartiger Mehrschichtmaterialien sind beispielsweise in EP-A 695 329, EP-A 707 956, EP 802 045, EP-A 1 008 442, EP-A 1 162 060, WO 03/93001 oder WO 03/93002 genannt, auf die wir an dieser Stelle ausdrücklich verweisen. Die erfindungsgemäßen Verpackungsdruckfarben können zum Bedrucken der Mehrschichtmaterialien verwendet werden. Die Verpackungsdruckfarbe kann dabei auf die Oberfläche des Mehrschichtmaterials aufgebracht werden, sie kann sich aber auch zwischen zwei Folien befinden. Drucklacke können beispielsweise zur Grundierung einzelner Folien des Materials oder auch als Schutzüberzug verwendet werden.

Die folgenden Versuch sollen die Erfindung näher illustrieren:

### A) Herstellung der Druckfarben

Druckfarben wurden nach folgender Standard-Rezeptur (Gew. Teile) durch intensives Mischen bzw. Dispergieren aller Komponenten erhalten:

| | |
|---|---|
| 70,0 | Pigment Präparation (BASF Drucksysteme) |
| 8,0 | Nitrocellulose (Wolff) |
| 6,0 | Polyurethan Co-Binder (BASF Drucksysteme, 75% ige Lösung in Ethanol) |
| 1,0 | Oleamid (Croda) |
| 0,5 | PE-Wachse (BASF AG) |

Weichmacher (Art und Menge gemäß Tabelle 1)
Ethylacetat als Lösemittel (Auffüllen auf 100 Gew. Teile)

Für die Beispiele und Vergleichbeispiele wurden die folgenden Weichmacher eingesetzt:

**Tabelle 1: Verwendete Weichmacher, *hergestellt durch Hydrierung eines Di(isononyl)phthalats mit der CAS Nr. 28553-12-0**

| Nr. | Weichmacher | Menge |
|---|---|---|
| Beispiel 1 | Di-isononyl-cyclohexan-1,2-dicarboxylat* (Hexamoll^{®} DINCH, BASF AG) | 1 Gew. % |
| Beispiel 2 | Di-isononyl-cyclohexan-1,2-dicarboxylat | 2 Gew. % |
| Beispiel 3 | Di-isononyl-cyclohexan-1,2-dicarboxylat | 3 Gew. % |
| Beispiel 4 | Diisobutyl-cyclohexan-1,2-dicarboxylat | 1 Gew. % |
| Beispiel 5 | Diisobutyl-cyclohexan-1,2-dicarboxylat | 2 Gew. % |
| Beispiel 6 | Diisobutyl-cyclohexan-1,2-dicarboxylat | 3 Gew. % |
| Vergleichsbeispiel 1 | ohne Weichmacher | - |
| Vergleichsbeispiel 2 | Acetyltributylcitrat | 1 Gew. % |
| Vergleichsbeispiel 3 | Acetyltributylcitrat | 2 Gew. % |

### B) Tests mit den erfindungsgemäßen Druckfarben

Mit den jeweils erhaltenen Druckfarben wurde mit einer üblichen Tiefdruckmaschine ein Testmuster auf Polyethylenfolie gedruckt. Das Testmuster wies verschiedene Abbildungen, Schriften, Vollflächen sowie Raster von 5 bis 95 % auf. Die Viskosität der Druckfarbe sowie Haftung, Kratzfestigkeit, Wasserbeständigkeit und Glanz des gedruckten Films waren vergleichbar. Deutliche Unterschiede gab es aber bei der Qualität der Drucke sowie beim Restlösemittelgehalt des gedruckten Films.

Die Auswertung der Testdrucke ist in Tabelle 2 zusammengestellt. Die Restlösemittelgehalte sind in Tabelle 3 zusammengestellt.

**Tabelle 2: Ergebnisse der Testdrucke**

| **Nr.** | **Kommentar** |
|---|---|
| Beispiel 1 | Gleichmäßiger Druck |
| Beispiel 2 | Gleichmäßiger Druck |
| Beispiel 3 | Gleichmäßiger Druck |
| Beispiel 4 | Gleichmäßiger Druck |
| Beispiel 5 | Gleichmäßiger Druck |
| Beispiel 6 | Gleichmäßiger Druck |
| Vergleichsbeispiel 1 | Flexibilität der gedruckten Schicht nicht ausreichend. Das 5%-Raster war nur ungleichmäßig gedruckt und wies Streifen auf. Es wurden nicht alle Rasterpunkte gedruckt. |
| Vergleichsbeispiel 2 | Flexibilität der gedruckten Schicht etwas besser als bei V1, aber nicht ausreichend. Das 5%-Raster war nur ungleichmäßig gedruckt und wies Streifen auf. Es wurden nicht alle Rasterpunkte gedruckt. |
| Vergleichsbeispiel 3 | Gleichmäßiger Druck |

**Tabelle 3: Restlösemittelgehalt des gedruckten Films**

| Nr. | Weichmacher | Menge | Restlösemittel [mg/m²] |
|---|---|---|---|
| Beispiel 1 | Di-isononyl-cyclohexan-1,2-dicarboxylat | 1 Gew. % | 31,2 |
| Beispiel 2 | Di-isononyl-cyclohexan-1,2-dicarboxylat | 2 Gew. % | 22,1 |
| Beispiel 3 | Di-isononyl-cyclohexan-1,2-dicarboxylat | 3 Gew. % | 17,7 |
| Beispiel 4 | Diisobutyl-cyclohexan-1,2-dicarboxylat | 1 Gew. % | 30,8 |
| Beispiel 5 | Diisobutyl-cyclohexan-1,2-dicarboxylat | 2 Gew. % | 20,4 |
| Beispiel 6 | Diisobutyl-cyclohexan-1,2-dicarboxylat | 3 Gew. % | 21 |
| Vergleichsbeispiel 1 | ohne Weichmacher | - | 41 |
| Vergleichsbeispiel 2 | Acetyltributylcitrat | 1 Gew. % | 33 |
| Vergleichsbeispiel 3 | Acetyltributylcitrat | 2 Gew. % | 25,5 |

Die Beispiele und Vergleichbeispiele zeigen, dass bei erfindungsgemäßer Verwendung von Cyclohexanpolycarbonsäurederivaten als Weichmacher im Vergleich zu konventionellen Weichmachern bereits die halbe Menge für den Erhalt eines guten Druckbildes ausreichend ist. Die Restlösemittelmengen in der gedruckten Schicht waren bei gleicher Weichmachermenge geringer als bei Verwendung konventioneller Weichmacher.

In einer weiteren Versuchsserie wurde die Flexibilität des Nitrocellulose Lackfilms bestimmt:
Nitrocellulose / Weichmacher Verhältnis: 1 / 0,8

Hierzu wurden bei der in Tabelle beschriebenen Formulierung der Lacke verschiedene Weichmacher eingesetzt, und die Lackfilme auf ein Blech aufgebracht. Von dem erhaltenen Film wurde die Pendelklebrigkeit mittels einer Pendeldämpfungsprüfung bestimmt sowie eine Dornbiegeprüfung durchgeführt. Die Ergebnisse sind in Tabelle 4 zusammengestellt.

### Pendeldämpfungsprüfung

Die Pendeldämpfungsprüfung wurde in Anlehnung an EN ISO 1522 (Ausgabe Sept. 2000) mit einem König-Pendel bestimmt. Bei der Pendeldämpfungsprüfung wird ein Pendel auf die Oberfläche der Beschichtung aufgesetzt und in Schwingungen versetzt. Die Messwerte sind in Pendelschlägen angegeben. Angegeben ist die Zahl der Pendelschläge von der ursprünglichen Auslenkung von 6° bis zu einer Auslenkung von 3°. Je höher die Anzahl der Pendelschläge, desto härter der Lackfilm.

### Dornbiegeprüfung

Die Dornbiegeprüfung wurde in Anlehnung an ISO 1519 (DIN 53152) durchgeführt.

Bei der Dornbiegeprüfung wird ein, mit dem zu prüfenden Lack, beschichtetes, maximal 0,3 mm dickes Stahlblech um einen zylindrischen Biegedorn mit einem definierten Durchmesser von 2-32 mm herumgebogen. Als Messwert wird der kleinstmögliche Durchmesser des Zylinders angegeben, bei dem noch keine Risse oder Delaminierung der Lackschicht vom Stahlträger auftritt. Je kleiner der Durchmesser des Biegedorns, desto flexiblerer der Lackfilm.

**Tabelle 4: Ergebnisse der Flexibilitätsprüfung von Schichten**

| **Lack** | **Weichmacher** | **Schichtdicke [µm]** | **Dornbiegeprüfung [mm]** | **Pendelklebrigkeit [Anzahl]** |
|---|---|---|---|---|
| 100 % Nitrocellulose | 80 % Di-isononyl-cyclohexan-1,2-dicarboxylat | 160 | 4 | 75 |
| 100 % Nitrocellulose | Ohne Weichmacher | 115 | Nicht möglich, Film reisst schon in planem Zustand auf Blech | 228 |
| 100 % Nitrocellulose | 80 % Dioctyladipat | 175 | 6 | 60 |
| 100 % Nitrocellulose | 80 % Diisononylphthalat | 160 | 4 | 75 |
| 100 % Nitrocellulose | 80 % Acetyltributylcitrat | 160 | 4 | 90 |
| 100 % Nitrocellulose | 80 % Polyurethan | 140 | 32 | 115 |

Die Ergebnisse der Flexibilitätsprüfung zeigen, dass die mit den erfindungsgemäßen Weichmachern erhaltenen Filmen hinsichtlich der Flexibilität und Härte vergleichbare Ergebnisse liefern wie Diisononylphthalat. Die Ergebnisse sind besser als mit Acetyltributylcitrat, welches als Ersatzstoff für Phthalate vorgeschlagen wurde.

## Patentansprüche

1. Verpackungsdruckfarbe, mindestens umfassend mindestens ein Lösemittel oder ein Gemisch verschiedener Lösemittel, mindestens ein Farbmittel, mindestens ein polymeres Bindemittel sowie einen oder mehrere Zusatzstoffe, **dadurch gekennzeichnet, dass** es sich bei mindestens einem der Zusatzstoffe um ein Cyclohexanpolycarbonsäurederivat handelt, ausgewählt aus der Gruppe bestehend aus
- gemischten Estern der Cyclohexan-1,2-dicarbonsäure mit C1 bis C13-Alkoholen;
- Cyclohexan-1,2-dicarbonsäuredi(isopentyl)estern, erhältlich durch Hydrierung von Di(isopentyl)phthalat mit der Chemical Abstracts Registry Nummer (im folgenden: CAS Nr.) 84777-06-0;
Cyclohexan-1,2-dicarbonsäuredi(isoheptyl)estern, erhältlich durch Hydrierung von Di(isoheptyl)phthalat mit der CAS Nr. 71888-89-6;
Cyclohexan-1,2-dicarbonsäuredi(isononyl)estern, erhältlich durch Hydrierung eines Di(isononyl)phthalats mit der CAS Nr. 68515-48-0;
Cyclohexan-1,2-dicarbonsäuredi(isononyl)estern, erhältlich durch Hydrierung eines Di(isononyl)phthalats mit der CAS Nr. 28553-12-0, basierend auf n-Buten;
Cyclohexan-1,2-dicarbonsäuredi(isononyl)estern, erhältlich durch Hydrierung eines Di(isononyl)phthalats mit der CAS Nr. 28553-12-0 basierend auf Isobuten;
einen 1,2-Di-C₉-Ester der Cyclohexandicarbonsäure, erhältlich durch Hydrierung eines Di(nonyl)phthalats mit der CAS Nr. 68515-46-8;
einen Cyclohexan-1,2-dicarbonsäuredi(isodecyl)ester erhältlich durch Hydrierung eines Di(isodecyl)phthalats mit der CAS Nr. 68515-49-1;
einen 1,2-Di-C₇₋₁₁-Ester der Cyclohexandicarbonsäure, erhältlich durch Hydrierung des entsprechenden Phthalsäureesters mit der CAS Nr. 68515-42-4;
einen 1,2-Di-C₇₋₁₁-Ester der Cyclohexandicarbönsäure, erhältlich durch Hydrierung der Di-C₇₋₁₁-Phthalate mit folgenden CAS Nr.
111 381-89-6,
111 381 90-9,
111 381 91-0,
68515-44-6,
68515-45-7 und
3648-20-7;
einen 1,2-Di-C₉₋₁₁-Ester der Cyclohexandicarbonsäure, erhältlich durch Hydrierung eines Di-C₉₋₁₁-Phthalats mit der CAS Nr. 98515-43-5;
einen 1,2-Di(isodecyl)cyclohexandicarbonsäureester, erhältlich durch Hydrierung eines Di(isodecyl)phthalats, das hauptsächlich aus Di-(2-propylheptyl)phthalt besteht;
einen 1,2-Di-C₇₋₉-Cyclohexandicarbonsäureester, erhältlich durch Hydrierung des entsprechenden Phthalsäureesters der verzweigtkettige oder lineare C₇₋₉-Alkylestergruppen aufweist; entsprechende beispielsweise als Ausgangsprodukte verwendbare Phthalate haben die folgende CAS Nr.:
Di-C_{7,9}-Alkylphthalat mit der CAS Nr. 111 381-89-6;
Di-C₇-Alkylphthalat mit der CAS Nr. 68515-44-6; und
Di-C₉-Alkylphthalat mit der CAS Nr. 68515-45-7.
- Hydrierprodukten von Phthalsäure-Mischestern mit C₁₀- und C₁₃-Alkoholen;
- Cyclohexan-1,2-dicarbonsäurealkylestern, wie z.B. Cyclohexan-1,2-dicarbonsäuremonomethylester, Cyclohexan-1,2-dicarbonsäuredimethyl-ester, Cyclohexan-1,2-dicarbonsäurediethylester, Cyclohexan-1,2-dicarbonsäuredi-n-propylester, Cyclohexan-1,2-dicarbonsäuredi-n-butylester, Cyclohexan-1,2-dicarbonsäuredi-tert.-butylester, Cyclohexan-1,2-dicarbonsäurediisobutylester, Cyclohexan-1,2-dicarbonsäuremonoglykolester, Cyclohexan-1,2-dicarbonsäurediglykolester, Cyclohexan-1,2-dicarbonsäuredin-octylester, Cyclohexan-1,2-dicarbonsäurediisooctylester, Cyclohexan-1,2-dicarbonsäuredi-2-ethylhexylester, Cyclohexan-1,2-dicarbonsäuredi-n-nonylester, Cyclohexan-1,2-dicarbonsäurediisononylester, Cyclohexan-1,2-dicarbonsäuredi-n-decylester, Cyclohexan-1,2-dicarbonsäurediisodecyl-ester, Cyclohexan-1,2-dicarbonsäuredi-n-undecylester, Cyclohexan-1,2-dicarbonsäurediisododecylester, Cyclohexan-1,2-dicarbonsäuredi-n-octadecylester, Cyclohexan-1,2-dicarbonsäurediisooctadecylester, Cyclohexan-1,2-dicarbonsäuremonocyclohexylester, Cyclohexan-1,2-dicarbonsäuredicyclohexylester, Cyclohe- xan-1,2-dicarbonsäurediisopropylester, Cyclohexan-1,2-dicarbonsäuredi-n-hexylester, Cyclohexan-1,2-dicarbonsäurediisohexylester, Cyclohexan-1,2-dicarbonsäuredi-n-heptylester, Cyclohexan-1,2-dicarbonsäurediisoheptyl-ester, Cyclohexan-1,2-dicarbonsäuredi-2-propylheptylester, Cyclohexan-1,2-dicarbonsäurediisoundecylester, Cyclohexan-1,2-dicarbonsäuredi-n-dodecylester, Cyclohexan-1,2-dicarbonsäuredi-n-tridecylester, Cyclohexan-1,2-dicarbonsäurediisotridecylester, Cyclohexan-1,2-dicarbonsäuredi-n-pentylester, Cyclohexan-1,2-dicarbonsäurediisopentylester;
den Hydrierungsprodukten der kommerziell erhältlichen Benzolcarbonsäure-ester mit den Handelsnamen Jayflex DINP (CAS Nr. 68515-48-0), Jayflex DIDP (CAS Nr. 68515-49-1), Vestinol 9 (CAS Nr. 28553-12-0), TOTM-I (CAS Nr. 3319-31-1), Linplast 68-TM, Palatinol N (CAS Nr. 28553-12-0), Jayflex DHP (CAS Nr. 68515-50-4), Jayflex DIOP (CAS Nr. 27554-26-3), Jayflex UDP (CAS Nr. 68515-47-9), Jayflex DIUP (CAS Nr. 85507-79-5), Jayflex DTDP (CAS Nr. 68515-47-9), Jayflex L9P (CAS Nr. 68515-45-7), Jayflex L911P (CAS Nr. 68515-43-5), Jayflex L11P (CAS Nr. 3648-20-2), Witamol 110 (CAS Nr. 90193-91-2), Witamol 118 (Di-n-C₈-C₁₀-alkylphthalat), Unimoll BB (CAS Nr. 85-68-7), Linplast 1012 BP (CAS Nr. 90193-92-3), Linplast 13 XP (CAS Nr. 27253-26-5), Linplast 610 P (CAS Nr. 68515-51-5), Linplast 68 FP (CAS Nr. 68648-93-1) und Linplast 812 HP (CAS Nr. 70693-30-0), Palatinol AH (CAS Nr. 117-81-7), Palatinol 711 (CAS Nr. 68515-42-4), Palatinol 911 (CAS Nr. 68515-43-5), Palatinol 11 (CAS Nr. 3648-20-2), Palatinol Z (CAS Nr. 26761-40-0) und Palatinol DIPP (CAS Nr. 84777-06-0),
und Gemischen aus zwei oder mehr davon, wobei der Anteil des Cyclohexanpolycarbonsäurederivates 0,1 bis 3 Gew.-% bezüglich der Summe aller Bestandteile der Druckfarbe beträgt.

2. Druckfarbe nach Anspruch 1, **dadurch gekennzeichnet, dass** das mindestens eine Cyclohexanpolycarbonsäurederivat ausgewählt wird aus kernhydrierten Phthalaten, die sich von einem Estergemisch enthaltend einen gemischten Ester ableiten.

3. Drucklack, der keine Farbmittel enthält, mindestens umfassend mindestens ein Lösemittel oder ein Gemisch verschiedener Lösemittel, mindestens ein polymeres Bindemittel sowie einen oder mehrere Zusatzstoffe, **dadurch gekennzeichnet, dass** es sich bei mindestens einem der Zusatzstoffe um ein Cyclohexanpolycarbonsäurederivat handelt, ausgewählt aus der Gruppe bestehend aus
- gemischten Estern der Cyclohexan-1,2-dicarbonsäure mit C1 bis C13-Alkoholen;
- Cyclohexan-1,2-dicarbonsäuredi(isopentyl)estern, erhältlich durch Hydrierung von Di(isopentyl)phthalat mit der Chemical Abstracts Registry Nummer (im folgenden: CAS Nr.) 84777-06-0;
Cyclohexan-1,2-dicarbonsäuredi(isoheptyl)estern, erhältlich durch Hydrierung von Di(isoheptyl)phthalat mit der CAS Nr. 71888-89-6;
Cyclohexan-1,2-dicarbonsäuredi(isononyl)estern, erhältlich durch Hydrierung eines Di(isononyl)phthalats mit der CAS Nr. 68515-48-0;
Cyclohexan-1,2-dicarbonsäuredi(isononyl)estern, erhältlich durch Hydrierung eines Di(isononyl)phthalats mit der CAS Nr. 28553-12-0, basierend auf n-Buten;
Cyclohexan-1,2-dicarbonsäuredi(isononyl)estern, erhältlich durch Hydrierung eines Di(isononyl)phthalats mit der CAS Nr. 28553-12-0 basierend auf Isobuten;
ein 1,2-Di-C₉-Ester der Cyclohexandicarbonsäuren, erhältlich durch Hydrierung eines Di(nonyl)phthalats mit der CAS Nr. 68515-46-8;
einen Cyclohexan-1,2-dicarbonsäuredi(isodecyl)ester erhältlich durch Hydrierung eines Di(isodecyl)phthalats mit der CAS Nr. 68515-49-1;
einen 1,2-Di-C₇₋₁₁-Ester der Cyclohexandicarbonsäure, erhältlich durch Hydrierung des entsprechenden Phthalsäureesters mit der CAS Nr. 68515-42-4;
einen 1,2-Di-C₇₋₁₁-Ester der Cyclohexandicarbonsäure, erhältlich durch Hydrierung der Di-C₇₋₁₁-Phthalate mit folgenden CAS Nr.
111 381-89-6,
111 381 90-9,
111 381 91-0,
68515-44-6,
68515-45-7 und
3648-20-7;
einen 1,2-Di-C₉₋₁₁-Ester der Cyclohexandicarbonsäure, erhältlich durch Hydrierung eines Di-C₉₋₁₁-Phthalats mit der CAS Nr. 98515-43-5;
einen 1,2-Di(isodecyl)cyclohexandicarbonsäureester, erhältlich durch Hydrierung eines Di(isodecyl)phthalats, das hauptsächlich aus Di-(2-propylheptyl)phthalt besteht;
einen 1,2-Di-C₇₋₉-Cyclohexandicarbonsäureester, erhältlich durch Hydrierung des entsprechenden Phthalsäureesters der verzweigtkettige oder lineare C₇₋₉-Alkylestergruppen aufweist; entsprechende beispielsweise als Ausgangsprodukte verwendbare Phthalate haben die folgende CAS Nr.:
Di-C_{7,9}-Alkylphthalat mit der CAS Nr. 111 381-89-6;
Di-C₇-Alkylphthalat mit der CAS Nr. 68515-44-6; und
Di-C₉-Alkylphthalat mit der CAS Nr. 68515-45-7.
- Hydrierprodukten von Phthalsäure-Mischestern mit C₁₀- und C₁₃-Alkoholen;
- Cyclohexan-1,2-dicarbonsäurealkylestern, wie z.B. Cyclohexan-1,2-dicarbonsäuremonomethylester, Cyclohexan-1,2-dicarbonsäuredimethyl-ester, Cyclohexan-1,2-dicarbonsäurediethylester, Cyclohexan-1,2-dicarbonsäuredi-n-propylester, Cyclohexan-1,2-dicarbonsäuredi-n-butylester, Cyclohexan-1,2-dicarbonsäuredi-tert.-butylester, Cyclohexan-1,2-dicarbonsäurediisobutylester, Cyclohexan-1,2-dicarbonsäuremonoglykolester, Cyclohexan-1,2-dicarbonsäurediglykolester, Cyclohexan-1,2-dicarbonsäuredin-octylester, Cyclohexan-1,2-dicarbonsäurediisooctylester, Cyclohexan-1,2-dicarbonsäuredi-2-ethylhexylester, Cyclohexan-1,2-dicarbonsäuredi-n-nonylester, Cyclohexan-1,2-dicarbonsäurediisononylester, Cyclohexan-1,2-dicarbonsäuredi-n-decylester, Cyclohexan-1,2-dicarbonsäurediisodecyl-ester, Cyclohexan-1,2-dicarbonsäuredi-n-undecylester, Cyclohexan-1,2-dicarbonsäurediisododecylester, Cyclohexan-1,2-dicarbonsäuredi-n-octadecylester, Cyclohexan-1,2-dicarbonsäurediisooctadecylester, Cyclohexan-1,2-dicarbonsäuremonocyclohexylester, Cyclohexan-1,2-dicarbonsäuredicyclohexylester, Cyclohe- xan-1,2-dicarbonsäurediisopropylester, Cyclohexan-1,2-dicarbonsäuredi-n-hexylester, Cyclohexan-1,2-dicarbonsäurediisohexylester, Cyclohexan-1,2-dicarbonsäuredi-n-heptylester, Cyclohexan-1,2-dicarbonsäurediisoheptyl-ester, Cyclohexan-1,2-dicarbonsäuredi-2-propylheptylester, Cyclohexan-1,2-dicarbonsäurediisoundecylester, Cyclohexan-1,2-dicarbonsäuredi-n-dodecylester, Cyclohexan-1,2-dicarbonsäuredi-n-tridecylester, Cyclohexan-1,2-dicarbonsäurediisotridecylester, Cyclohexan-1,2-dicarbonsäuredi-n-pentylester, Cyclohexan-1,2-dicarbonsäurediisopentylester;
- den Hydrierungsprodukten der kommerziell erhältlichen Benzolcarbonsäure-ester mit den Handelsnamen Jayflex DINP (CAS Nr. 68515-48-0), Jayflex DIDP (CAS Nr. 68515-49-1), Vestinol 9 (CAS Nr. 28553-12-0), TOTM-I (CAS Nr. 3319-31-1), Linplast 68-TM, Palatinol N (CAS Nr. 28553-12-0), Jayflex DHP (CAS Nr. 68515-50-4), Jayflex DIOP (CAS Nr. 27554-26-3), Jayflex UDP (CAS Nr. 68515-47-9), Jayflex DIUP (CAS Nr. 85507-79-5), Jayflex DTDP (CAS Nr. 68515-47-9), Jayflex L9P (CAS Nr. 68515-45-7), Jayflex L911P (CAS Nr. 68515-43-5), Jayflex L11P (CAS Nr. 3648-20-2), Witamol 110 (CAS Nr. 90193-91-2), Witamol 118 (Di-n-C₈-C₁₀-alkylphthalat), Unimoll BB (CAS Nr. 85-68-7), Linplast 1012 BP (CAS Nr. 90193-92-3), Linplast 13 XP (CAS Nr. 27253-26-5), Linplast 610 P (CAS Nr. 68515-51-5), Linplast 68 FP (CAS Nr. 68648-93-1) und Linplast 812 HP (CAS Nr. 70693-30-0), Palatinol AH (CAS Nr. 117-81-7), Palatinol 711 (CAS Nr. 68515-42-4), Palatinol 911 (CAS Nr. 68515-43-5), Palatinol 11 (CAS Nr. 3648-20-2), Palatinol Z (CAS Nr. 26761-40-0) und Palatinol DIPP (CAS Nr. 84777-06-0),
und Gemischen aus zwei oder mehr davon.

4. Drucklack nach Anspruch 3, **dadurch gekennzeichnet, dass** das mindestens eine Cyclohexanpolycarbonsäurederivat ausgewählt wird aus kernhydrierten Phthalaten, die sich von einem Estergemisch enthaltend einen gemischten Ester ableiten.

5. Verwendung der Verpackungsdruckfarbe gemäß einem der Ansprüche 1 oder 2 zum Bedrucken von Kunststoff- oder Metallfolien.

6. Verwendung der Verpackungsdruckfarbe gemäß einem der Ansprüche 1 oder 2 zum Herstellen von Mehrschichtmaterialien für Verpackungen.

7. Verwendung eines Drucklackes gemäß einem der Ansprüche 3 oder 4 zum Herstellen von Mehrschichtmaterialien für Verpackungen.

8. Verwendung nach Anspruch 7 zum Grundieren von Kunststoff- oder Metallfolien, als Schutzschicht oder als Vergütungsschicht.

## Claims

1. A packaging printing ink, at least comprising at least one solvent or a mixture of various solvents, at least one colorant, at least one polymeric binder, and also one or more additives, wherein at least one of the additives is a cyclohexanepolycarboxylic acid derivative selected from the group consisting of
- mixed esters of cyclohexane-1,2-dicarboxylic acid with C1-C13 alcohols;
- di(isopentyl) esters of cyclohexane-1,2-dicarboxylic acid obtainable via hydrogenation of di(isopentyl) phthalate with the Chemical Abstracts Registry Number (hereinafter: CAS No.) 84777-06-0;
di(isoheptyl) esters of cyclohexane-1,2-dicarboxylic acid obtainable via hydrogenation of di(isoheptyl) phthalate with the CAS No. 71888-89-6;
di(isononyl) esters of cyclohexane-1,2-dicarboxylic acid obtainable via hydrogenation of a di(isononyl) phthalate with the CAS No. 68515-48-0;
di(isononyl) esters of cyclohexane-1,2-dicarboxylic acid obtainable via hydrogenation of a di(isononyl) phthalate with the CAS No. 28553-12-0, based on n-butene;
di(isononyl) esters of cyclohexane-1,2-dicarboxylic acid obtainable via hydrogenation of a di(isononyl) phthalate with the CAS No. 28553-12-0, based on isobutene;
a 1,2-di-Cg ester of cyclohexanedicarboxylic acid obtainable via hydrogenation of a di(nonyl) phthalate with the CAS No. 68515-46-8;
a di(isodecyl) ester of cyclohexane-1,2-dicarboxylic acid obtainable via hydrogenation of a di(isodecyl) phthalate with the CAS No. 68515-49-1;
a 1,2-di-C₇₋₁₁ ester of cyclohexanedicarboxylic acid obtainable via hydrogenation of the corresponding ester of phthalic acid with the CAS No. 68515-42-4;
a 1,2-di-C₇₋₁₁ ester of cyclohexanedicarboxylic acid obtainable via hydrogenation of di-C₇₋₁₁ phthalates with the following CAS Nos.
111 381-89-6,
111 381 90-9,
111 381 91-0,
68515-44-6,
68515-45-7, and
3648-20-7;
a 1,2-di-C₉₋₁₁ ester of cyclohexanedicarboxylic acid obtainable via hydrogenation of a di-C₉₋₁₁ phthalate with the CAS No. 98515-43-5;
a 1,2-di(isodecyl) ester of cyclohexanedicarboxylic acid obtainable via hydrogenation of a di(isodecyl) phthalate composed mainly of di(2-propylheptyl) phthalate;
a 1,2-di-C₇₋₉ ester of cyclohexanedicarboxylic acid obtainable via hydrogenation of the corresponding esters of phthalic acid of the branched-chain or linear C₇₋₉-alkyl ester groups; examples of appropriate phthalates which can be used as starting materials have the following CAS Nos.:
a di-C_{7,9}-alkyl phthalate with the CAS No. 111 381-89-6;
a di-C₇-alkyl phthalate with the CAS No. 68515-44-6; and
a di-Cg-alkyl phthalate with the CAS No. 68515-45-7;
- hydrogenation products of mixed phthalates with C₁₀ alcohols and with C₁₃ alcohols;
- alkyl esters of cyclohexane-1,2-dicarboxylic acid, e.g. monomethyl ester of cyclohexane-1,2-dicarboxylic acid, dimethyl ester of cyclohexane-1,2-dicarboxylic acid, diethyl ester of cyclohexane-1,2-dicarboxylic acid, di-n-propyl ester of cyclohexane-1,2-dicarboxylic acid, di-n-butyl ester of cyclohexane-1,2-dicarboxylic acid, di-tert-butyl ester of cyclohexane-1,2-dicarboxylic acid, diisobutyl ester of cyclohexane-1,2-dicarboxylic acid, monoglycol ester of cyclohexane-1,2-dicarboxylic acid, diglycol ester of cyclohexane-1,2-dicarboxylic acid, di-n-octyl ester of cyclohexane-1,2-dicarboxylic acid, diisooctyl ester of cyclohexane-1,2-dicarboxylic acid, di-2-ethylhexyl ester of cyclohexane-1,2-dicarboxylic acid, di-n-nonyl ester of cyclohexane-1,2-dicarboxylic acid, diisononyl ester of cyclohexane-1,2-dicarboxylic acid, di-n-decyl ester of cyclohexane-1,2-dicarboxylic acid, diisodecyl ester of cyclohexane-1,2-dicarboxylic acid, di-n-undecyl ester of cyclohexane-1,2-dicarboxylic acid, diisododecyl ester of cyclohexane-1,2-dicarboxylic acid, di-n-octadecyl ester of cyclohexane-1,2-dicarboxylic acid, diisooctadecyl ester of cyclohexane-1,2-dicarboxylic acid, monocyclohexyl ester of cyclohexane-1,2-dicarboxylic acid, dicyclohexyl ester of cyclohexane-1,2-dicarboxylic acid, diisopropyl ester of cyclohexane-1,2-dicarboxylic acid, di-n-hexyl ester of cyclohexane-1,2-dicarboxylic acid, diisohexyl ester of cyclohexane-1,2-dicarboxylic acid, di-n-heptyl ester of cyclohexane-1,2-dicarboxylic acid, diisoheptyl ester of cyclohexane-1,2-dicarboxylic acid, di-2-propylheptyl ester of cyclohexane-1,2-dicarboxylic acid, diisoundecyl ester of cyclohexane-1,2-dicarboxylic acid, di-n-dodecyl ester of cyclohexane-1,2-dicarboxylic acid, di-n-tridecyl ester of cyclohexane-1,2-dicarboxylic acid, diisotridecyl ester of cyclohexane-1,2-dicarboxylic acid, di-n-pentyl ester of cyclohexane-1,2-dicarboxylic acid, diisopentyl ester of cyclohexane-1,2-dicarboxylic acid;
- hydrogenation products of the commercially available benzenecarboxylic esters with the trade names Jayflex DINP (CAS No. 68515-48-0), Jayflex DIDP (CAS No. 68515-49-1), Vestinol 9 (CAS No. 28553-12-0), TOTM-I (CAS No. 3319-31-1), Linplast 68-TM, Palatinol N (CAS No. 28553-12-0), Jayflex DHP (CAS No. 68515-50-4), Jayflex DIOP (CAS No. 27554-26-3), Jayflex UDP (CAS No. 68515-47-9), Jayflex DIUP (CAS No. 85507-79-5), Jayflex DTDP (CAS No. 68515-47-9), Jayflex L9P (CAS No. 68515-45-7), Jayflex L911P (CAS No. 68515-43-5), Jayflex L11P (CAS No. 3648-20-2), Witamol 110 (CAS No. 90193-91-2), Witamol 118 (di-n-C₈-C₁₀-alkyl phthalate), Unimoll BB (CAS No. 85-68-7), Linplast 1012 BP (CAS No. 90193-92-3), Linplast 13 XP (CAS No. 27253-26-5), Linplast 610 P (CAS No. 68515-51-5), Linplast 68 FP (CAS No. 68648-93-1) and Linplast 812 HP (CAS No. 70693-30-0), Palatinol AH (CAS No. 117-81-7), Palatinol 711 (CAS No. 68515-42-4), Palatinol 911 (CAS No. 68515-43-5), Palatinol 11 (CAS No. 3648-20-2), Palatinol Z (CAS No. 26761-40-0) and Palatinol DIPP (CAS No. 84777-06-0),
and mixtures of two or more of these, where the proportion of the cyclohexanepolycarboxylic acid derivative is from 0.1 to 3% by weight, based on the entirety of all of the constituents of the printing ink.

2. The printing ink according to claim 1, wherein the at least one cyclohexanepolycarboxylic acid derivative is selected from ring-hydrogenated phthalates which derive from an ester mixture which comprises a mixed ester.

3. A printing lacquer which comprises no colorants, at least comprising at least one solvent or a mixture of various solvents, at least one polymeric binder, and also one or more additives, wherein at least one of the additives is a cyclohexanepolycarboxylic acid derivative selected from the group consisting of
- mixed esters of cyclohexane-1,2-dicarboxylic acid with C1-C13 alcohols;
- di(isopentyl) esters of cyclohexane-1,2-dicarboxylic acid obtainable via hydrogenation of di(isopentyl) phthalate with the Chemical Abstracts Registry Number (hereinafter: CAS No.) 84777-06-0;
di(isoheptyl) esters of cyclohexane-1,2-dicarboxylic acid obtainable via hydrogenation of di(isoheptyl) phthalate with the CAS No. 71888-89-6;
di(isononyl) esters of cyclohexane-1,2-dicarboxylic acid obtainable via hydrogenation of a di(isononyl) phthalate with the CAS No. 68515-48-0;
di(isononyl) esters of cyclohexane-1,2-dicarboxylic acid obtainable via hydrogenation of a di(isononyl) phthalate with the CAS No. 28553-12-0, based on n-butene;
di(isononyl) esters of cyclohexane-1,2-dicarboxylic acid obtainable via hydrogenation of a di(isononyl) phthalate with the CAS No. 28553-12-0, based on isobutene;
a 1,2-di-Cg ester of cyclohexanedicarboxylic acid obtainable via hydrogenation of a di(nonyl) phthalate with the CAS No. 68515-46-8;
a di(isodecyl) ester of cyclohexane-1,2-dicarboxylic acid obtainable via hydrogenation of a di(isodecyl) phthalate with the CAS No. 68515-49-1;
a 1,2-di-C₇₋₁₁ ester of cyclohexanedicarboxylic acid obtainable via hydrogenation of the corresponding ester of phthalic acid with the CAS No. 68515-42-4;
a 1,2-di-C₇₋₁₁ ester of cyclohexanedicarboxylic acid obtainable via hydrogenation of di-C₇₋₁₁ phthalates with the following CAS Nos.
111 381-89-6,
111 381 90-9,
111 381 91-0,
68515-44-6,
68515-45-7, and
3648-20-7;
a 1,2-di-C₉₋₁₁ ester of cyclohexanedicarboxylic acid obtainable via hydrogenation of a di-C₉₋₁₁ phthalate with the CAS No. 98515-43-5;
a 1,2-di(isodecyl) ester of cyclohexanedicarboxylic acid obtainable via hydrogenation of a di(isodecyl) phthalate composed mainly of di(2-propylheptyl) phthalate;
a 1,2-di-C₇₋₉ ester of cyclohexanedicarboxylic acid obtainable via hydrogenation of the corresponding esters of phthalic acid of the branched-chain or linear C₇₋₉-alkyl ester groups; examples of appropriate phthalates which can be used as starting materials have the following CAS Nos.:
a di-C_{7,9}-alkyl phthalate with the CAS No. 111 381-89-6;
a di-C₇-alkyl phthalate with the CAS No. 68515-44-6; and
a di-Cg-alkyl phthalate with the CAS No. 68515-45-7;
- hydrogenation products of mixed phthalates with C₁₀ alcohols and with C₁₃ alcohols;
- alkyl esters of cyclohexane-1,2-dicarboxylic acid, e.g. monomethyl ester of cyclohexane-1,2-dicarboxylic acid, dimethyl ester of cyclohexane-1,2-dicarboxylic acid, diethyl ester of cyclohexane-1,2-dicarboxylic acid, di-n-propyl ester of cyclohexane-1,2-dicarboxylic acid, di-n-butyl ester of cyclohexane-1,2-dicarboxylic acid, di-tert-butyl ester of cyclohexane-1,2-dicarboxylic acid, diisobutyl ester of cyclohexane-1,2-dicarboxylic acid, monoglycol ester of cyclohexane-1,2-dicarboxylic acid, diglycol ester of cyclohexane-1,2-dicarboxylic acid, di-n-octyl ester of cyclohexane-1,2-dicarboxylic acid, diisooctyl ester of cyclohexane-1,2-dicarboxylic acid, di-2-ethylhexyl ester of cyclohexane-1,2-dicarboxylic acid, di-n-nonyl ester of cyclohexane-1,2-dicarboxylic acid, diisononyl ester of cyclohexane-1,2-dicarboxylic acid, di-n-decyl ester of cyclohexane-1,2-dicarboxylic acid, diisodecyl ester of cyclohexane-1,2-dicarboxylic acid, di-n-undecyl ester of cyclohexane-1,2-dicarboxylic acid, diisododecyl ester of cyclohexane-1,2-dicarboxylic acid, di-n-octadecyl ester of cyclohexane-1,2-dicarboxylic acid, diisooctadecyl ester of cyclohexane-1,2-dicarboxylic acid, monocyclohexyl ester of cyclohexane-1,2-dicarboxylic acid, dicyclohexyl ester of cyclohexane-1,2-dicarboxylic acid, diisopropyl ester of cyclohexane-1,2-dicarboxylic acid, di-n-hexyl ester of cyclohexane-1,2-dicarboxylic acid, diisohexyl ester of cyclohexane-1,2-dicarboxylic acid, di-n-heptyl ester of cyclohexane-1,2-dicarboxylic acid, diisoheptyl ester of cyclohexane-1,2-dicarboxylic acid, di-2-propylheptyl ester of cyclohexane-1,2-dicarboxylic acid, diisoundecyl ester of cyclohexane-1,2-dicarboxylic acid, di-n-dodecyl ester of cyclohexane-1,2-dicarboxylic acid, di-n-tridecyl ester of cyclohexane-1,2-dicarboxylic acid, diisotridecyl ester of cyclohexane-1,2-dicarboxylic acid, di-n-pentyl ester of cyclohexane-1,2-dicarboxylic acid, diisopentyl ester of cyclohexane-1,2-dicarboxylic acid;
- hydrogenation products of the commercially available benzenecarboxylic esters with the trade names Jayflex DINP (CAS No. 68515-48-0), Jayflex DIDP (CAS No. 68515-49-1), Vestinol 9 (CAS No. 28553-12-0), TOTM-I (CAS No. 3319-31-1), Linplast 68-TM, Palatinol N (CAS No. 28553-12-0), Jayflex DHP (CAS No. 68515-50-4), Jayflex DIOP (CAS No. 27554-26-3), Jayflex UDP (CAS No. 68515-47-9), Jayflex DIUP (CAS No. 85507-79-5), Jayflex DTDP (CAS No. 68515-47-9), Jayflex L9P (CAS No. 68515-45-7), Jayflex L911P (CAS No. 68515-43-5), Jayflex L11P (CAS No. 3648-20-2), Witamol 110 (CAS No. 90193-91-2), Witamol 118 (di-n-C₈-C₁₀-alkyl phthalate), Unimoll BB (CAS No. 85-68-7), Linplast 1012 BP (CAS No. 90193-92-3), Linplast 13 XP (CAS No. 27253-26-5), Linplast 610 P (CAS No. 68515-51-5), Linplast 68 FP (CAS No. 68648-93-1) and Linplast 812 HP (CAS No. 70693-30-0), Palatinol AH (CAS No. 117-81-7), Palatinol 711 (CAS No. 68515-42-4), Palatinol 911 (CAS No. 68515-43-5), Palatinol 11 (CAS No. 3648-20-2), Palatinol Z (CAS No. 26761-40-0) and Palatinol DIPP (CAS No. 84777-06-0),
and mixtures of two or more of these.

4. The printing lacquer according to claim 3, wherein the at least one cyclohexanepolycarboxylic acid derivative is selected from ring-hydrogenated phthalates which derive from an ester mixture which comprises a mixed ester.

5. The use of the packaging printing ink according to either of claims 1 and 2, for the printing of plastics foils or of metal foils.

6. The use of the packaging printing ink according to either of claims 1 and 2, for the production of multilayer materials for packaging.

7. The use of a printing lacquer according to either of claims 3 and 4, for the production of multilayer materials for packaging.

8. The use according to claim 7, for the priming of plastics foils or of metal foils, or as protective layer, or as finishing layer.

## Revendications

1. Encre d'imprimerie pour emballages, comprenant au moins un solvant ou un mélange de différents solvants, au moins un colorant, au moins un liant polymère ainsi qu'un ou plusieurs additifs, **caractérisée en ce qu'**il s'agit, pour au moins l'un des additifs, d'un dérivé d'acide cyclohexanepolycarboxylique, choisi dans le groupe constitué par
- des esters mixtes de l'acide cyclohexane-1,2-dicarboxylique comprenant des alcools en C₁-C₁₃ ;
- des esters di(isopentyliques) de l'acide cyclohexane-1,2-dicarboxylique, pouvant être obtenus par hydrogénation de phtalate de di(isopentyle) portant le n° du "Chemical Abstracts Registry" (dans la suite : n° CAS) 84777-06-0 ;
des esters di(isoheptyliques) de l'acide cyclohexane-1,2-dicarboxylique, pouvant être obtenus par hydrogénation de phtalate de di(isoheptyle) présentant le n° CAS : 71888-89-6 ; des esters di(isononyliques) de l'acide cyclohexane-1,2-dicarboxylique, pouvant être obtenus par hydrogénation d'un phtalate de di(isononyle) présentant le n° CAS 68515-48-0 ; des esters di(isononyliques) de l'acide cyclohexane-1,2-dicarboxylique, pouvant être obtenus par hydrogénation d'un phtalate de di(isononyle) présentant le n° CAS : 28553-12-0, à base de n-butène ;
des esters di(isononyliques) de l'acide cyclohexane-1,2-dicarboxylique, pouvant être obtenus par hydrogénation d'un phtalate de di(isononyle) présentant le n° CAS : 28553-12-0, à base d'isobutène ;
un 1,2-di-Cg-ester de l'acide cyclohexanedicarboxylique, pouvant être obtenu par hydrogénation d'un phtalate de di(nonyle) présentant le n° CAS 68515-46-8 ;
un ester di(isodécylique) de l'acide cyclohexane-1,2-dicarboxylique pouvant être obtenu par hydrogénation d'un phtalate de di(isodécyle) présentant le n° CAS 68515-49-1 ;
un 1, 2-di-C₇₋₁₁-ester de l'acide cyclohexanedicarboxylique, pouvant être obtenu par hydrogénation de l'ester de l'acide phtalique correspondant présentant le n° CAS 68515-42-4 ;
un 1,2-di-C₇₋₁₁-ester de l'acide cyclohexanedicarboxylique, pouvant être obtenu par hydrogénation de di-C₇₋₁₁-phtalates présentant les n° CAS suivants :
111 381-89-6,
111 381 90-9,
111 381 91-0,
68515-44-6,
68515-45-7 et
3648-20-7 ;
un 1,2-di-C₉₋₁₁-ester de l'acide cyclohexanedicarboxylique, pouvant être obtenu par hydrogénation d'un di-C₉-₁₁-phtalate présentant le n° CAS 98515-43-5 :
un 1,2-di(isodécyl)-ester de l'acide cyclohexanedicarboxylique, pouvant être obtenu par hydrogénation d'un phtalate de di(isodécyle) qui est principalement constitué par du phtalate de di-(2-propylheptyle) ;
un 1,2-di-C₇₋₉-ester de l'acide cyclohexanedicarboxylique, pouvant être obtenu par hydrogénation de l'ester de l'acide phtalique correspondant qui présente des groupes ester de C₇-₉-alkyle linéaires ou ramifiés ; des phtalates correspondants, pouvant par exemple être utilisés comme produits de départ, présentent les n° CAS suivants :
phtalate de di-C_{7,9}-alkyle présentant le n° CAS 111 381-89-6 ;
phtalate de di-C₇-alkyle présentant le n° CAS 68515-44-6 ; et
phtalate de di-Cg-alkyle présentant le n° CAS 68515-45-7,
- des produits d'hydrogénation d'esters mixtes de l'acide phtalique avec des alcools en C₁₀ et en C₁₃ ;
- des esters alkyliques de l'acide cyclohexane-1,2-dicarboxylique, tels que par exemple l'ester monométhylique de l'acide cyclohexane-1,2-dicarboxylique,
l'ester diméthylique de l'acide cyclohexane-1,2-dicarboxylique,
l'ester diéthylique de l'acide cyclohexane-1,2-dicarboxylique,
l'ester di-n-propylique de l'acide cyclohexane-1,2-dicarboxylique,
l'ester di-n-butylique de l'acide cyclohexane-1,2-dicarboxylique,
l'ester di-tert-butylique de l'acide cyclohexane-1,2-dicarboxylique,
l'ester diisobutylique de l'acide cyclohexane-1,2-dicarboxylique,
l'ester monoglycolique de l'acide cyclohexane-1,2-dicarboxylique,
l'ester diglycolique de l'acide cyclohexane-1,2-dicarboxylique,
l'ester di-n-octylique de l'acide cyclohexane-1,2-dicarboxylique,
l'ester diisooctylique de l'acide cyclohexane-1,2-dicarboxylique,
l'ester di-2-éthylhexylique de l'acide cyclohexane-1,2-dicarboxylique,
l'ester di-n-nonylique de l'acide cyclohexane-1,2-dicarboxylique,
l'ester diisononylique de l'acide cyclohexane-1,2-dicarboxylique,
l'ester di-n-décylique de l'acide cyclohexane-1,2-dicarboxylique,
l'ester diisodécylique de l'acide cyclohexane-1,2-dicarboxylique,
l'ester di-n-undécylique de l'acide cyclohexane-1,2-dicarboxylique,
l'ester diisododécylique de l'acide cyclohexane-1,2-dicarboxylique,
l'ester di-n-octadécylique de l'acide cyclohexane-1,2-dicarboxylique,
l'ester diisooctadécylique de l'acide cyclohexane-1,2-dicarboxylique,
l'ester monocyclohexylique de l'acide cyclohexane-1,2-dicarboxylique,
l'ester dicyclohexylique de l'acide cyclohexane-1,2-dicarboxylique,
l'ester diisopropylique de l'acide cyclohexane-1,2-dicarboxylique,
l'ester di-n-hexylique de l'acide cyclohexane-1,2-dicarboxylique,
l'ester diisohexylique de l'acide cyclohexane-1,2-dicarboxylique,
l'ester di-n-heptylique de l'acide cyclohexane-1,2-dicarboxylique,
l'ester diisoheptylique de l'acide cyclohexane-1,2-dicarboxylique,
l'ester di-2-propylheptylique de l'acide cyclohexane-1,2-dicarboxylique,
l'ester diiso-undécylique de l'acide cyclohexane-1,2-dicarboxylique,
l'ester di-n-dodécylique de l'acide cyclohexane-1,2-dicarboxylique,
l'ester di-n-tridécylique de l'acide cyclohexane-1,2-dicarboxylique,
l'ester diisotridécylique de l'acide cyclohexane-1,2-dicarboxylique,
l'ester di-n-pentylique de l'acide cyclohexane-1,2-dicarboxylique,
l'ester diisopentylique de l'acide cyclohexane-1,2-dicarboxylique,
- les produits d'hydrogénation des esters de l'acide benzènecarboxylique pouvant être obtenus dans le commerce, présentant les dénominations commerciales Jayflex DINP (n° CAS 68515-48-0), Jayflex DIDP (n° CAS 68515-49-1), Vestinol 9 (n° CAS 28553-12-0), TOTM-I (n° CAS 3319-31-1), Linplast 68-TM, Palatinol N (n° CAS 28553-12-0), Jayflex DHP (n° CAS 68515-50-4), Jayflex DIOP (n° CAS 27554-26-3), Jayflex UDP (n° CAS 68515-47-9), Jayflex DIUP (n° CAS 85507-79-5), Jayflex DTDP (n° CAS 68515-47-9), Jayflex L9P (n° CAS 68515-45-7), Jayflex L911P (n° CAS 68515-43-5), Jayflex L11P (n° CAS 3648-20-2), Witamol 110 (n° CAS 90193-91-2), Witamol 118 (phtalate de di-n-C₈-C₁₀-alkyle), Unimoll BB (n° CAS 85-68-7), Linplast 1012 BP (n° CAS 90193-92-3), Linplast 13 XP (n° CAS 27253-26-5), Linplast 610 P (n° CAS 68515-51-5), Linplast 68 FP (n° CAS 68648-93-1) et Linplast 812 HP (n° CAS 70693-30-0), Palatinol AH (n° CAS 117-81-7), Palatinol 711 (n° CAS 68515-42-4), Palatinol 911 (n° CAS 68515-43-5), Palatinol 11 (n° CAS 3648-20-2), Palatinol Z (n° CAS 26761-40-0) et Palatinol DIPP (n° CAS 84777-06-0),
et des mélanges de deux ou plus de ceux-ci, la proportion du dérivé d'acide cyclohexanepolycarboxylique représentant 0,1 à 3% en poids par rapport à la somme de tous les constituants de l'encre d'imprimerie.

2. Encre d'imprimerie selon la revendication 1, **caractérisée en ce que** ledit au moins un dérivé de l'acide cyclohexanepolycarboxylique est choisi parmi les phtalates à noyau hydrogéné, qui sont dérivés d'un mélange d'esters contenant un ester mixte.

3. Laque d'imprimerie, qui ne contient pas de colorants, au moins comprenant au moins un solvant ou un mélange de différents solvants, au moins un liant polymère ainsi qu'un ou plusieurs autres additifs, **caractérisée en ce qu'**il s'agit, pour au moins un des additifs, d'un dérivé d'acide cyclohexanepolycarboxylique, choisi dans le groupe constitué par
- des esters mixtes de l'acide cyclohexane-1,2-dicarboxylique comprenant des alcools en C₁-C₁₃ ;
- des esters di(isopentyliques) de l'acide cyclohexane-1,2-dicarboxylique, pouvant être obtenus par hydrogénation de phtalate de di(isopentyle) portant le n° du "Chemical Abstracts Registry" (dans la suite : n° CAS) 84777-06-0 ;
des esters di(isoheptyliques) de l'acide cyclohexane-1,2-dicarboxylique, pouvant être obtenus par hydrogénation de phtalate de di(isoheptyle) présentant le n° CAS : 71888-89-6 ; des esters di(isononyliques) de l'acide cyclohexane-1,2-dicarboxylique, pouvant être obtenus par hydrogénation d'un phtalate de di(isononyle) présentant le n° CAS 68515-48-0 ; des esters di(isononyliques) de l'acide cyclohexane-1,2-dicarboxylique, pouvant être obtenus par hydrogénation d'un phtalate de di(isononyle) présentant le n° CAS : 28553-12-0, à base de n-butène ;
des esters di(isononyliques) de l'acide cyclohexane-1,2-dicarboxylique, pouvant être obtenus par hydrogénation d'un phtalate de di(isononyle) présentant le n° CAS : 28553-12-0, à base d'isobutène ;
un 1,2-di-Cg-ester des acides cyclohexanedicarboxyliques, pouvant être obtenu par hydrogénation d'un phtalate de di(nonyle) présentant le n° CAS 68515-46-8 ;
un ester di(isodécylique) de l'acide cyclohexane-1,2-dicarboxylique pouvant être obtenu par hydrogénation d'un phtalate de di(isodécyle) présentant le n° CAS 68515-49-1 ;
un 1,2-di-C₇₋₁₁-ester de l'acide cyclohexanedicarboxylique, pouvant être obtenu par hydrogénation de l'ester de l'acide phtalique correspondant présentant le n° CAS 68515-42-4 ;
un 1,2-di-C₇₋₁₁-ester de l'acide cyclohexanedicarboxylique, pouvant être obtenu par hydrogénation de di-C₇-₁₁-phtalates présentant les n° CAS suivants :
111 381-89-6,
111 381 90-9,
111 381 91-0,
68515-44-6,
68515-45-7 et
3648-20-7 ;
un 1,2-di-C₉₋₁₁-ester de l'acide cyclohexanedicarboxylique, pouvant être obtenu par hydrogénation d'un di-C₉₋₁₁-phtalate présentant le n° CAS 98515-43-5 ;
un 1,2-di(isodécyl)-ester de l'acide cyclohexanedicarboxylique, pouvant être obtenu par hydrogénation d'un phtalate de di(isodécyle) qui est principalement constitué par du phtalate de di-(2-propylheptyle) ;
un 1,2-di-C₇₋₉-ester de l'acide cyclohexanedicarboxylique, pouvant être obtenu par hydrogénation de l'ester de l'acide phtalique correspondant qui présente des groupes ester de C₇-₉-alkyle linéaires ou ramifiés ; des phtalates correspondants, pouvant par exemple être utilisés comme produits de départ, présentent les n° CAS suivants :
phtalate de di-C_{7,9}-alkyle présentant le n° CAS 111 381-89-6 ;
phtalate de di-C₇-alkyle présentant le n° CAS 68515-44-6 ; et
phtalate de di-Cg-alkyle présentant le n° CAS 68515-45-7,
- des produits d'hydrogénation d'esters mixtes de l'acide phtalique avec des alcools en C₁₀ et en C₁₃;
- des esters alkyliques de l'acide cyclohexane-1,2-dicarboxylique, tels que par exemple
l'ester monométhylique de l'acide cyclohexane-1,2-dicarboxylique,
l'ester diméthylique de l'acide cyclohexane-1,2-dicarboxylique,
l'ester diéthylique de l'acide cyclohexane-1,2-dicarboxylique,
l'ester di-n-propylique de l'acide cyclohexane-1,2-dicarboxylique,
l'ester di-n-butylique de l'acide cyclohexane-1,2-dicarboxylique,
l'ester di-tert-butylique de l'acide cyclohexane-1,2-dicarboxylique,
l'ester diisobutylique de l'acide cyclohexane-1,2-dicarboxylique,
l'ester monoglycolique de l'acide cyclohexane-1,2-dicarboxylique,
l'ester diglycolique de l'acide cyclohexane-1,2-dicarboxylique,
l'ester di-n-octylique de l'acide cyclohexane-1,2-dicarboxylique,
l'ester diisooctylique de l'acide cyclohexane-1,2-dicarboxylique,
l'ester di-2-éthylhexylique de l'acide cyclohexane-1,2-dicarboxylique,
l'ester di-n-nonylique de l'acide cyclohexane-1,2-dicarboxylique,
l'ester diisononylique de l'acide cyclohexane-1,2-dicarboxylique,
l'ester di-n-décylique de l'acide cyclohexane-1,2-dicarboxylique,
l'ester diisodécylique de l'acide cyclohexane-1,2-dicarboxylique,
l'ester di-n-undécylique de l'acide cyclohexane-1,2-dicarboxylique,
l'ester diisododécylique de l'acide cyclohexane-1,2-dicarboxylique,
l'ester di-n-octadécylique de l'acide cyclohexane-1,2-dicarboxylique,
l'ester diisooctadécylique de l'acide cyclohexane-1,2-dicarboxylique,
l'ester monocyclohexylique de l'acide cyclohexane-1,2-dicarboxylique,
l'ester dicyclohexylique de l'acide cyclohexane-1,2-dicarboxylique,
l'ester diisopropylique de l'acide cyclohexane-1,2-dicarboxylique,
l'ester di-n-hexylique de l'acide cyclohexane-1,2-dicarboxylique,
l'ester diisohexylique de l'acide cyclohexane-1,2-dicarboxylique,
l'ester di-n-heptylique de l'acide cyclohexane-1,2-dicarboxylique,
l'ester diisoheptylique de l'acide cyclohexane-1,2-dicarboxylique,
l'ester di-2-propylheptylique de l'acide cyclohexane-1,2-dicarboxylique,
l'ester diiso-undécylique de l'acide cyclohexane-1,2-dicarboxylique,
l'ester di-n-dodécylique de l'acide cyclohexane-1,2-dicarboxylique,
l'ester di-n-tridécylique de l'acide cyclohexane-1,2-dicarboxylique,
l'ester diisotridécylique de l'acide cyclohexane-1,2-dicarboxylique,
l'ester di-n-pentylique de l'acide cyclohexane-1,2-dicarboxylique,
l'ester diisopentylique de l'acide cyclohexane-1,2-dicarboxylique,
- les produits d'hydrogénation des esters de l'acide benzènecarboxylique pouvant être obtenus dans le commerce, présentant les dénominations commerciales Jayflex DINP (n° CAS 68515-48-0), Jayflex DIDP (n° CAS 68515-49-1), Vestinol 9 (n° CAS 28553-12-0), TOTM-I (n° CAS 3319-31-1), Linplast 68-TM, Palatinol N (n° CAS 28553-12-0), Jayflex DHP (n° CAS 68515-50-4), Jayflex DIOP (n° CAS 27554-26-3), Jayflex UDP (n° CAS 68515-47-9), Jayflex DIUP (n° CAS 85507-79-5), Jayflex DTDP (n° CAS 68515-47-9), Jayflex L9P (n° CAS 68515-45-7), Jayflex L911P (n° CAS 68515-43-5), Jayflex L11P (n° CAS 3648-20-2), Witamol 110 (n° CAS 90193-91-2), Witamol 118 (phtalate de di-n-C₈-C₁₀-alkyle), Unimoll BB (n° CAS 85-68-7), Linplast 1012 BP (n° CAS 90193-92-3), Linplast 13 XP (n° CAS 27253-26-5), Linplast 610 P (n° CAS 68515-51-5), Linplast 68 FP (n° CAS 68648-93-1) et Linplast 812 HP (n° CAS 70693-30-0), Palatinol AH (n° CAS 117-81-7), Palatinol 711 (n° CAS 68515-42-4), Palatinol 911 (n° CAS 68515-43-5), Palatinol 11 (n° CAS 3648-20-2), Palatinol Z (n° CAS 26761-40-0) et Palatinol DIPP (n° CAS 84777-06-0),
et des mélanges de deux ou plus de ceux-ci.

4. Laque d'imprimerie selon la revendication 3, **caractérisée en ce que** ledit au moins un dérivé de l'acide cyclohexanepolycarboxylique est choisi parmi les phtalates à noyau hydrogéné, qui sont dérivés d'un mélange d'esters contenant un ester mixte.

5. Utilisation de l'encre d'imprimerie pour emballages selon l'une quelconque des revendications 1 et 2 pour l'impression de feuilles en matériau synthétique ou métalliques.

6. Utilisation de l'encre d'imprimerie pour emballages selon l'une quelconque des revendications 1 et 2 pour la fabrication de matériaux multicouches pour emballages.

7. Utilisation d'une laque d'imprimerie selon l'une quelconque des revendications 3 et 4 pour la fabrication de matériaux multicouches pour emballages.

8. Utilisation selon la revendication 7 pour l'apprêt de feuilles en matériau synthétique ou métalliques, comme couche de protection ou couche d'amélioration de la qualité.
